(19) Europäisches Patentamt
European Patent Office
Office européen des brevets

(11) **EP 4 571 364 A1**

(12) **EUROPEAN PATENT APPLICATION**

(43) Date of publication:
**18.06.2025 Bulletin 2025/25**

(21) Application number: **23215755.2**

(22) Date of filing: **12.12.2023**

(51) International Patent Classification (IPC):
**G01S 19/49** (2010.01)     **G01S 19/52** (2010.01)
**G01S 19/39** (2010.01)

(52) Cooperative Patent Classification (CPC):
**G01S 19/49; G01S 19/393; G01S 19/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Trimble Inc.**
**Westminster, CO 80021 (US)**

(72) Inventor: **Görcke, Lorenz**
**München (DE)**

(74) Representative: **Hoffmann Eitle**
**Patent- und Rechtsanwälte PartmbB**
**Arabellastraße 30**
**81925 München (DE)**

(54) **NAVIGATION SATELLITE SYSTEM-BASED POSITIONING METHOD AND SYSTEM USING VELOCITY-CHANGE-RELATED AIDING DATA**

(57)     Some embodiments of the invention pertain to methods carried out by a navigation satellite system (NSS) receiver for estimating parameters useful to determine a position. The receiver observes signals from satellites. The method comprises an estimator (10) using state variables and computing values of its state variables based on: first NSS signals observed by the NSS receiver, and/or information derived therefrom. The estimator uses a subset of state variables comprising six state variables representing an estimated position and estimated velocity. The subset is recurrently updated under a constant-velocity assumption and an estimated velocity change and time-integrated velocity change are added thereto. The estimated velocity change and time-integrated velocity change are based on data from a sensor for determining a change in velocity. Systems and vehicles using such a method are also disclosed.

Fig. 1c

EP 4 571 364 A1

**Description**

**[Field of technology]**

The invention relates to methods, systems, and computer programs using navigation satellite system (NSS) observations for position estimation, trajectory estimation, or for other purposes. The fields of application of the methods, systems, and computer programs include, but are not limited to, navigation, highly automated driving, autonomous driving, mapmaking, land surveying, civil engineering, construction, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), and the Indian Regional Navigational Satellite System (IRNSS, also referred to as NAVIC) (systems in use or in development), and is also intended to be inclusive of both MEO-PNT and LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of reference [1] (a list of references is provided at the end of the present description, after a list of abbreviations and acronyms).

Positioning using NSS signal codes provides a limited accuracy, notably due to the distortion the code is subject to upon transmission through the atmosphere.

The carrier signals transmitted by the NSS satellites can also be tracked to provide an alternative, or complementary means of determining the range, or change in range between the receiver and satellite. Carrier phase measurements from multiple NSS satellites facilitate estimation of the position of the NSS receiver.

The approach based on carrier phase measurements has the potential to provide much greater position precision compared to the code-based approach.

However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem", or "phase ambiguity resolution problem", which may be solved to yield the so-called fixed-ambiguity solution (sometimes referred to simply as the fixed solution).

GNSS observation equations for code observations and for carrier phase observations are for instance provided in ref. [1], section 5. An introduction to the GNSS integer ambiguity resolution problem, and its conventional solutions, is provided in ref. [1], section 7.2. The person skilled in the art will recognize that the same or similar principles apply to RNSS.

The main GNSS observables are therefore the carrier phase and code (pseudorange), the former being generally much more precise than the latter, but ambiguous. These observables enable a user to obtain the geometric distance from the receiver to the satellite.

NSS position estimation loses accuracy and is known to produce erroneous solutions when signal tracking is (partially) blocked or disturbed. Thus, it is desirable to use more information in the estimation, i.e. information that is independent of signal tracking errors. For example, information gained from auxiliary sensors like an inertial measurement unit (IMU) may be used.

Integrating measurements from an inertial navigation system (INS) and a GNSS is known in the art. The benefits and drawbacks of INS and GNSS are, to a certain extent, complementary (see, e.g., ref. [2a], p. 363, and more generally Chapter 12 thereof, i.e. pp. 363-406). The integration of measurements from more than two different navigation systems is also known in the art, as described for example in ref. [2a], Section 14.1 (i.e., pp. 420-433). One approach is to use a so-called total-state Kalman filter (see for example ref. [2a], Section 14.1.6), in which the state vector comprises a navigation solution "together with error states for each of the navigation systems integrated" (ref. [2a], p. 429). Another approach is to use a so-called error-state Kalman filter (see for example ref. [2a], Section 14.1.7), in which "the integrated navigation solution comprises the navigation solution of a reference navigation system, corrected using measurements from the other constituent navigation systems", wherein the reference navigation system is "an INS or other dead-reckoning system" (ref. [2a], p. 432).

The integration with one Kalman filter as mentioned above generally results in high processing demand because the Kalman filter has a large number of states and measurements (typically adding at least 15 states for INS). This may also be quite complex to implement because typically the data for GNSS estimation (e.g. RTK corrections) and the other sensor data (e.g. IMU) need to be synchronized with buffers. Another limitation of INS/GNSS is that it requires a good (expensive) IMU to avoid introducing errors (for example due to IMU noise and bias instability) in the position solution output by the INS/GNSS.

Methods using a second estimator to estimate antenna positions, velocities or antenna delta-positions using INS and other sensors are known in the art. The positions, velocities or delta-positions are considered as measurements in the GNSS estimation. However, a problem with these methods is that computing measurements in one state estimator using the estimates of another state estimator is not robust, because the errors can be time correlated.

There is a constant need for improving the implementation of positioning or similar systems making use of NSS observables, such as systems integrating measurements from different navigation systems, notably in terms of processing efficiency (i.e., processing load), implementation complexity, and solution accuracy and robustness.

**[Summary]**

The present invention aims at addressing the above-mentioned need. The invention includes methods, systems, computer programs, computer program products, and storage mediums as defined in the independent claims. Particular embodiments are defined in the dependent claims.

In one embodiment, a method is carried out by at least one of a NSS receiver and a processing entity capable of receiving data from the NSS receiver, for estimating parameters useful to, i.e. suitable to, determine a position. The NSS receiver observes NSS signals from a plurality of NSS satellites. The method comprises the following steps and/or operations. An estimation process, hereinafter referred to as "NSS estimator", is operated, in which the NSS estimator uses state variables and computes values of its state variables based on at least one of: (i) NSS signals, hereinafter referred to as "first NSS signals", observed by the NSS receiver and (ii) information derived from the first NSS signals. Further, the NSS estimator uses, among other state variables, a subset of state variables comprising six state variables representing an estimated position and estimated velocity of a point associated with the NSS receiver, the point being hereinafter referred to as "NSS receiver reference point". The subset of state variables used by the NSS estimator is recurrently updated under a constant-velocity assumption, and an estimated velocity change and an estimated time-integrated velocity change of the NSS receiver reference point are added to the values of the state variables of the subset. The estimated velocity change and estimated time-integrated velocity change of the NSS receiver reference point are based on data from at least one sensor suitable for determining a change in velocity of the NSS receiver reference point.

The method creates the ability to integrate, efficiently in terms of processing load, aiding data from one or more sensors suitable for determining a change in velocity of a point associated with the NSS receiver (a so-called "NSS receiver reference point") with an NSS-based estimation process. These benefits in terms of computational efficiency may, in turn, translate into benefits in terms of energy savings, battery life, and/or battery size and hence NSS receiver size. The benefits in terms of computational efficiency may alternatively translate into the ability to use a less powerful CPU.

In one embodiment, a system comprises at least one of: a NSS receiver, and a processing entity capable of receiving data from the NSS receiver, the system being for estimating parameters useful to, i.e. suitable to, determine a position, the NSS receiver being configured for observing NSS signals from a plurality of NSS satellites, and the system being configured for carrying out the above-described method. In one embodiment, a vehicle comprises such a system.

In some embodiments, computer programs, computer program products and storage media for storing such computer programs are provided. Such computer programs comprise computer-executable instructions configured for carrying out, when executed on a computer such as one embedded in, or otherwise part of, a NSS receiver or in another apparatus, or when executed on a set of computers such as a set of computers embedded in, or otherwise part of, a set of apparatuses, the above-described method.

**[Brief description of the drawings]**

Embodiments of the present invention shall now be described in conjunction with the appended drawings in which:

Fig. 1a is a schematic diagram of a method in one embodiment of the invention;
Fig. 1b is a flowchart of the method schematically illustrated by the diagram of Fig. 1a;
Fig. 1c is a schematic diagram of a method in one embodiment of the invention, wherein the estimated velocity change and estimated time-integrated velocity change of the NSS receiver reference point are not, or not necessarily, computed further based on second NSS signals and/or information derived therefrom;
Fig. 2 is a schematic diagram of a method in another embodiment of the invention, which further comprises outputting an estimated position of a NSS receiver reference point;

Fig. 3 is a schematic diagram of a method in a further embodiment of the invention, which further comprises accumulating the estimated velocity change and estimated time-integrated velocity change of a NSS receiver reference point prior to updating the subset of state variables;

Fig. 4 is a schematic diagram of a method in another embodiment of the invention, wherein the sensor(s) suitable for determining a change in velocity of a NSS receiver reference point is or comprises an inertial measurement unit (IMU);

Fig. 5 is a schematic diagram of a method in a further embodiment of the invention, which further comprises operating a delta-velocity estimator;

Fig. 6 is a schematic diagram of a method in yet a further embodiment of the invention, which comprises operating a delta-velocity estimator and providing, from the delta-velocity estimator to the NSS estimator, information as described below;

Fig. 7 is a schematic diagram of a method in a further embodiment of the invention, combining the embodiments described with reference to Figs. 3 and 5;

Fig. 8 is a schematic diagram of a method in yet a further embodiment of the invention, combining the embodiments described with reference to Figs. 3 and 6;

Fig. 9 is a schematic diagram of a method in one embodiment of the invention;

Fig. 10 schematically illustrates a close-loop aided INS architecture which some embodiments of the invention use; and

Fig. 11 schematically illustrates a system in one embodiment of the invention.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments. In addition, as mentioned above in the "Background" section, the term "NSS" is here intended to cover many types of embodiments, and those may also include embodiments involving MEO-PNT and/or LEO-PNT navigation satellite systems.

In the art, the term "observables" is often used to refer to structures of an NSS signal from which observations or measurements can be made (PRN-code, carrier phase) (see e.g. ref. [3]: "The word *observable* is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "carrier phase observable" has the same meaning as "carrier phase observation". Further, when the present document describes that an NSS signal is observed, this means that at least an observation (measurement) of at least an observable of the NSS signal is made.

When the term "real-time" is used in the present document, it means that there is an action (e.g., data is processed, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

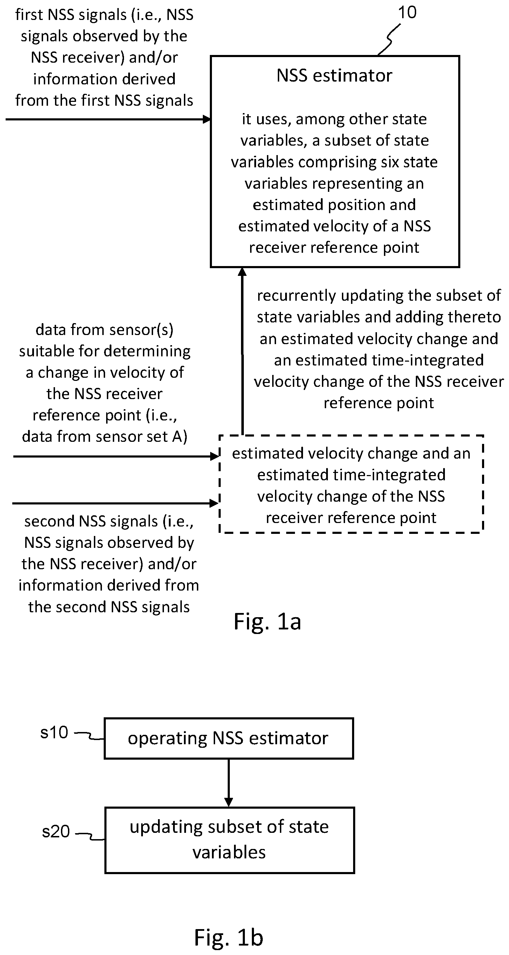

Fig. 1a is a schematic diagram of a method in one embodiment of the invention, and Fig. 1b is a corresponding flowchart of that method. The method may be carried out by a NSS receiver configured for observing NSS signals from a plurality of NSS satellites over multiple epochs, by another processing entity capable of receiving data from the NSS receiver, or by an NSS receiver in conjunction with such other processing entity (i.e., by an NSS receiver and another processing entity). The processing entity may be located remotely from the NSS receiver and may, for example, receive data representing the NSS observations from the NSS receiver.

The NSS receiver comprises at least one antenna, i.e. it may comprise a single antenna or a plurality of antennas. If NSS receiver comprises one antenna configured to receive signals at one frequency, there may be a single electrical antenna phase centre (APC). If NSS receiver comprises one antenna configured to receive signals at a plurality of frequencies (i.e., different frequencies broadcasted by NSS satellites, whether from one NSS or from a plurality of NSS), there may be one APC per frequency, i.e. in total a plurality of APCs. Likewise, there are a plurality of APCs if the NSS receiver comprises a plurality of antennas. The methods are mainly described in the present document for a single APC -and corresponding NSS signals and measurements- associated with a single frequency. However, the methods, using antenna phase correction tables if required as practiced in the art, may also be applied for a plurality of APCs -and corresponding NSS signals and measurementsassociated with different frequencies in parallel.

In one embodiment, the method aims at estimating parameters derived from NSS signals useful to (i.e., suitable to) determine (i.e., estimate) a position, such as a position of a rover receiver (also called "rover system" or simply "rover"), a position of a moving reference station (which may for example be used in a "moving base" application; see next paragraph in that respect), a position of an APC of a rover receiver, or a position of an APC of a moving reference station. The method may eventually lead to estimating a rover position (such as a rover's APC position) or moving reference station position (such as a moving reference station's APC position). In one embodiment, the position is a position relative to a reference point or initial point, whose absolute position need not necessarily be precisely known, and the method may aim at estimating a trajectory relative to the reference point or initial point.

The above-referred "moving base" application may for example be an application in which a reference receiver is carried on a vehicle in the vicinity of another vehicle carrying another NSS receiver. For example, the reference receiver may be carried on a first car in the vicinity of a second car carrying another NSS receiver. As another example, the reference receiver may be carried on a moving platform that an unmanned aerial vehicle (UAV) carrying another NSS receiver may be programmed to follow and/or land on. The moving base application may alternatively be an application in which a reference receiver is carried on a first part of a vehicle and another NSS receiver is carried on a second part of the vehicle. For example, the first part may be the body of a bulldozer whereas the second part may be the bulldozer's blade.

The estimated parameters may for example indicate the most probable number of carrier cycles along the distance separating an NSS satellite from the NSS receiver, i.e. the estimated parameters may be the resolved integer ambiguity. This also means that the method may estimate the position itself but not necessarily: parameters may be estimated that may be used, for example by another entity (such as a processing entity on a server dedicated to such task), to estimate or determine the position of the NSS receiver (e.g., a rover receiver) or of a moving reference station.

The application relying on NSS observations to produce an estimate of said parameters, or a combination thereof, may for example be a highly automated driving or autonomous driving application relying on NSS observations to produce an estimate of the position, velocity, or acceleration of a vehicle.

In step s10, an estimation process, here referred to as "NSS estimator" 10, is operated. NSS estimator 10 uses state variables and computes values of its state variables based on: (i) NSS signals, here referred to as "first NSS signals", observed by the NSS receiver, and/or (ii) information derived from the first NSS signals. NSS estimator 10 may optionally use additional data to compute the values of its state variables, such as data from a broadcasted correction stream (see e.g. refs. [4] and [5]).

NSS estimator 10 is or comprises an algorithm, procedure, or process, or a piece of software, firmware, and/or hardware configured for implementing such an algorithm, procedure, or process, in which a set of state variables (or "state vector") is maintained over time, i.e. the values of the state variables are estimated based on measurements made over time. The measurements may comprise data representing the observed NSS signals. The estimator involves or comprises, in one embodiment, a Kalman filter and/or a robust estimator. The invention is, however, not limited to the use of Kalman filter(s) and/or robust estimator(s). Other estimation processes, filters, or filter techniques may be used.

The estimator's state variables may represent, for example, the position of one or more points of, or associated with, the NSS receiver (such as the position of an APC of the NSS receiver), an offset in the position of one or more points of, or associated with, the NSS receiver relative to another position (the offset per se being therefore a relative position), an offset in the position of one or more points of, or associated with, the NSS receiver relative to another epoch, the rate of change of the position, the rate of change of the offset in the position, a bias related to the NSS receiver, a bias related to any of the NSS satellites, a bias related to any of the satellite systems, a bias related to any of the NSS signals, the rate of change of any of the said biases, or any combination of the above.

More specifically, NSS estimator 10 uses, among other state variables, a subset of state variables comprising six state variables representing an estimated position and estimated velocity of a point associated with the NSS receiver, the point being here referred to as "NSS receiver reference point". In other words, NSS estimator 10 uses state variables among which six represent an estimated position and estimated velocity of the NSS receiver reference point. The expression "point associated with the NSS receiver" means, in one embodiment, that the point is a point of the NSS receiver, such as a point of an antenna of the NSS receiver, or a point corresponding to an APC of the NSS receiver, or a point being at a fixed position relative to the position of one or more APC of the NSS receiver.

In one embodiment, the NSS receiver comprises a single antenna and has a single APC, and the NSS receiver reference point is the APC. In this embodiment, the NSS receiver reference point may also be a point being at a position derived from the position of the APC. In another embodiment, the NSS receiver comprises a single antenna and has a plurality of APCs (as mentioned above, if an antenna is configured to receive NSS signals at a plurality of frequencies, there may be a plurality of APCs for the antenna), and the NSS receiver reference point is one of the APCs or is a point being at a position derived from the relative positions of the APCs (e.g., if there are two APCs, the midpoint between the APCs). In this embodiment, the NSS receiver reference point may also be a point being at a position derived from the position of one of the APCs. In yet another embodiment, the NSS receiver comprises a plurality of antennas and has a plurality of APCs, and the NSS receiver reference point is one of the APCs or is a point being at a position derived from the relative positions of the APCs. Also in this embodiment, the NSS receiver reference point may also be a point being at a position derived from the position of one of the APCs.

In one embodiment, NSS estimator 10 computes values of its state variables at the receiver epoch rate so that the estimator epoch rate is equal to the time interval between two successive receiver epochs. In another embodiment, NSS estimator 10 computes values of its state variables at a lower rate than the receiver epoch rate. In such a case, this means that the method does not necessarily use all the data collected by the NSS receiver. In one embodiment, NSS estimator 10 computes values of its state variables at a lower rate than the receiver epoch rate depending on a condition, such as a condition depending on the number of available satellites ("available" means here available from the perspective of the NSS receiver, i.e. satellites from which the NSS receiver can receive NSS signals). For example, the method may be configured so that NSS estimator 10 computes values of its state variables at a lower rate than the receiver epoch rate if the number of available satellites is 6 or larger than 6.

In one embodiment, the NSS receiver has a plurality of APCs, and a plurality of NSS estimators 10 are operated with position and velocity states for a single APC each.

In step s20, the above-referred subset of six state variables is recurrently updated under a constant-velocity assumption (Note: this update may be called a "time update" of the states because it accounts for changes over time, i.e. for a time step from one estimation epoch to the next), and an estimated velocity change and an estimated time-integrated velocity change of the NSS receiver reference point (such as an estimated velocity change and estimated time-integrated velocity change of an APC of the NSS receiver reference point) are added to the values of the state variables of the subset. Specifically, in one embodiment, the estimated time-integrated velocity change may be added to the values of the state variables representing the estimated position of the NSS receiver reference point (an example for this addition is provided in equation (14) below), whereas the estimated velocity change may be added to the values of the state variables representing an estimated velocity of the NSS receiver reference point (an example for this addition is provided in equation (15) below).

In other words, the subset of six state variables is recurrently updated and then corrected using the estimated velocity change and estimated time-integrated velocity change of the NSS receiver reference point, which collectively constitute aiding data (in that respect, see also for example equation (16)). This aiding data is sometimes called "delta-velocity aiding data" or "time update aiding data" in the present document. The delta-velocity aiding data or time update aiding data represents information about velocity change of the NSS receiver reference point in a form that can be used to correct the constant velocity update. The process of correcting the values of the six state variables of the subset based on the delta-velocity aiding data is advantageous in that the process allows relevant information, including motion constraints and information about accelerating receiver motion that can be measured with a sensor (e.g. IMU), to be converted into the delta-velocity aiding data and injected into NSS estimator 10 without adding complexity thereto. This in turn allows the operation of NSS estimator 10 to be improved, notably in terms of processing efficiency and accuracy of the outputted solution (e.g. a position solution).

Updating the subset of six state variables means updating the values of the state variables of the subset, and "recurrently updating" means doing so at least twice sequentially in time. In one embodiment, "recurrently updating" means that the update is performed periodically, such as at each receiver epoch. In one embodiment, step s20 is repeatedly performed over time. The number of iterations may be a preset number. Alternatively, the number of iterations may be determined in runtime. For example, the method may be performed as long as a vehicle is moving in order to determine its position along the trajectory it takes.

In one embodiment, the delta-velocity aiding data is added after performing a time update of the NSS estimator 10 with the constant velocity transition matrix. An example of this process is illustrated by equations (14) to (18) below.

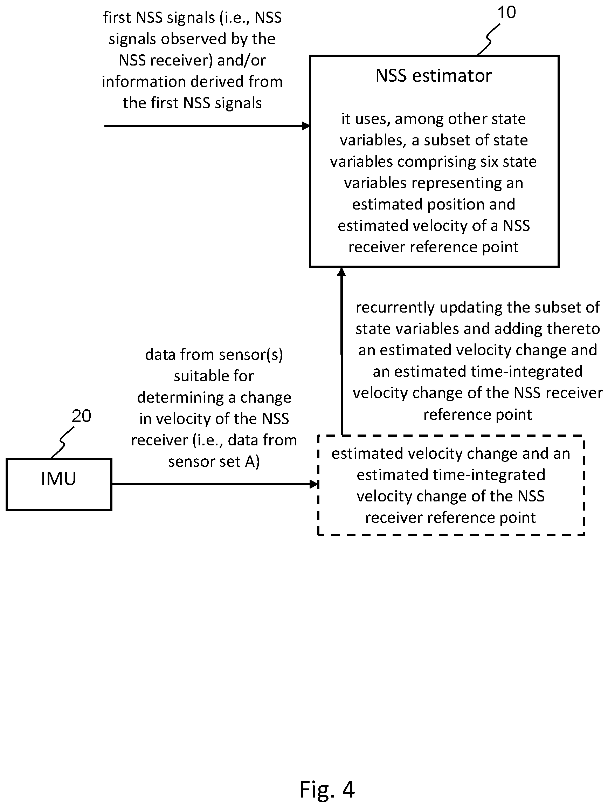

The estimated velocity change and estimated time-integrated velocity change of the NSS receiver reference point (i.e., collectively the delta-velocity aiding data or time update aiding data) are computed based, on the one hand, on data from at least one sensor suitable for determining a change in velocity of the NSS receiver reference point, and, on the other hand, on: (a) NSS signals, here referred to as "second NSS signals", observed by the NSS receiver, and/or (b) information derived from the second NSS signals. The at least one sensor suitable for determining a change in velocity of the NSS receiver reference point is hereinafter referred to as "sensor set A", for the sake of conciseness. In other words, data from sensor set A and the second NSS signals (and/or information derived therefrom) are used to obtain the delta-velocity aiding data. The data from sensor set A (which may comprise IMU data as described below with reference to Fig. 4) and the second NSS signals constitute data usable to estimate orientation of sensor set A from the NSS receiver (in that respect, see for example ref. [2b], Chapter 14), and are used to estimate the orientation of sensor set A (i.e., of sensor set A's frame) with respect to a frame (e.g., some Earth-referenced frame) that NSS estimator 10 uses. The data from sensor set A and the second NSS signals are useful to align the orientation of sensor set A's frame and the NSS receiver's frame. Further, the NSS receiver antenna(s) based on which the second NSS signals are obtained and sensor set A are preferably attached, directly or indirectly, to the same rigid body.

The time-integrated velocity change of the NSS receiver reference point can be computed using numerical time-integration schemes known in the art (such as for example the Forward Euler scheme).

When the second NSS signals are carrier phase measurements or delta-carrier-phase measurements, accurate orientation estimation is possible even for low-dynamic antenna motion. The term "delta-carrier-phase measurements" is here synonymous to time-differenced carrier phase measurements (the same applies to other occurrences of the word "delta", which means time-differenced).

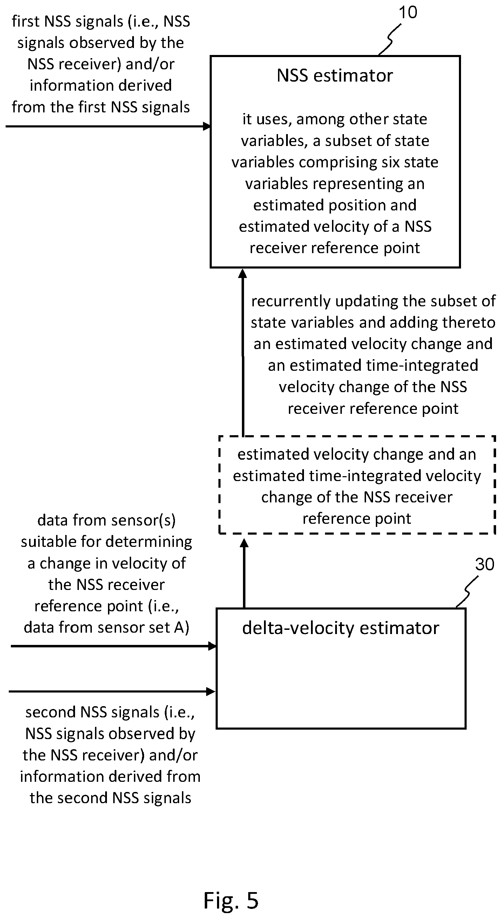

In one embodiment, a further estimator may be used to obtain the delta-velocity aiding data, as will be explained below with reference to Fig. 5.

As mentioned above, the delta-velocity aiding data comprises the estimated velocity change and estimated time-integrated velocity change of the NSS receiver reference point. In one embodiment, the delta-velocity aiding data further comprises an associated covariance matrix to model the increase of velocity uncertainty associated with the above-mentioned velocity change, the propagation of this increase to the position uncertainty, and the correlation between both.

The second NSS signals are different from, partially different from, or the same as the first NSS signals. In one embodiment, the second NSS signals are signals from which GNSS heading information may be derived. In another embodiment, the second NSS signals are the same as the first NSS signals. In one embodiment, the second NSS signals are partially different from the first NSS signals for example in that the second NSS signals are a subset of the first NSS signals. In one embodiment, NSS estimator 10 uses first NSS signals (raw observables) whereas the delta-velocity aiding data, i.e. the estimated velocity change and estimated time-integrated velocity change of the NSS receiver reference point, is computed based on information derived from NSS signals, such a position solution and/or velocity solution from the NSS receiver or from NSS estimator 10. If the delta-velocity aiding data is computed based on a position solution and/or velocity solution from NSS estimator 10, this means that NSS estimator 10 is started before the delta-velocity aiding data is available. This can be implemented by initially setting the delta-velocity aiding data (or vector) to zero and by conservatively inflating the associated covariance.

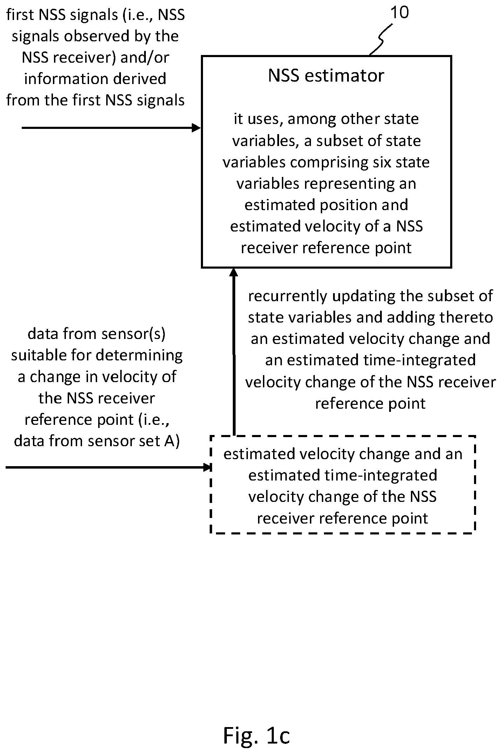

Fig. 1c is a schematic diagram of a method in one embodiment of the invention, which differs from the embodiment described with reference to Fig. 1a in that the estimated velocity change and estimated time-integrated velocity change of the NSS receiver reference point are not, or not necessarily, computed further based on second NSS signals and/or information derived therefrom (as discussed above with reference to Fig. 1a). In other words, the embodiment of Fig. 1c shows that the second NSS signals or information derived therefrom are not essential for computing the estimated velocity change and time-integrated velocity change of the NSS receiver reference point.

In one embodiment (which is in line with Fig. 1c), the estimated velocity change and estimated time-integrated velocity change of the NSS receiver reference point are computed further based on a process using (i) sensor set A, which, in this embodiment, comprises a lidar sensor rigidly attached, directly or indirectly, to an antenna or antennas of the NSS receiver, (ii) a map-based localization (MBL) algorithm, and (iii) a predetermined map, the MBL algorithm being used for estimating a position and orientation of the lidar sensor and the process being for estimating the velocity change of the NSS receiver reference point. In such a process, the lidar sensor (attached directly/indirectly to the antenna) may for example be used together with a MBL algorithm (MBL: computation of positions and orientation within a map at a high rate, e.g. 5 Hz, using the lidar sensor measurements) and a predetermined map (created in a mapping step which may precede steps s10 and s20 in time and may be independent therefrom). If the map was generated in a frame matching the definition of the state parameter subset of NSS estimator 10 (e.g., the ECEF frame or the NED frame), the positions and orientations computed with MBL can be used to compute the velocity change of the NSS receiver reference point directly without need for determining a coordinate transformation.

In one embodiment (which is in line with Fig. 1c), the estimated velocity change and estimated time-integrated velocity change of the NSS receiver reference point are computed further based on a process using a robotic total station (RTS) (some models of RTS being also called "universal total station" or UTS) for estimating a position of sensor set A, or a process using a camera localization system for estimating a position of sensor set A. In such a process, a RTS or UTS (e.g., the Trimble SPS930, available from Trimble Inc., Colorado, U.S.) or a camera localization system (e.g., a system available from Vicon Motion Systems Ltd, U.K.) installed on the site where the method is used may be operated to determine the velocity change of the NSS receiver reference point directly in NSS coordinates based on the high-rate position measurements of these systems. In this embodiment, the installation of the RTS or visual localization system within the NSS coordinate frame is determined prior to using the claimed method/system (e.g. using traverse or auto-stationing for the RTS).

The velocity change of the NSS receiver reference point can be estimated as a 3D vector $\Delta v \big|_{t_i}^{t_k}$ that represents the difference of velocity at a time $t_k$ and an earlier point in time $t_i < t_k$.

$$\Delta v \big|_{t_i}^{t_k} = v(t_k) - v(t_i) = v \big|_{t_k} - v \big|_{t_i} \tag{1}$$

Two mathematical notations will be used interchangeably in the following for indicating the time (e.g. time $t_k$ at instant $k$) of a quantity which evolves as a continuous function of time or is sampled at multiple time instants (e.g. the vector

$v$), for example $v(t_k)$ and $v|_{t_k}$.

Representing velocity by the time derivative of position, notated by $\frac{d}{dt}()$, in the previous equation:

$$\Delta v|_{t_i}^{t_k} = \frac{d}{dt}(p)\Big|_{t_k} - \frac{d}{dt}(p)\Big|_{t_i} \tag{2}$$

This relationship of the velocity change vector and position time derivatives is used in some embodiments for computing velocity change from high-rate position estimates. The time derivatives of position in the previous equation can be approximated with numerical time differentiation schemes known to the art, such as the central differences scheme:

$$\frac{d}{dt}(p)\Big|_{t_k} = \frac{1}{2h}\big(p(t_k + h) - p(t_k - h)\big) \tag{3}$$

where $h$ is a small positive time increment and $p(t_k + h)$ and $p(t_k - h)$ are samples of the high-rate position estimates.
The time-integrated velocity change can be represented as integral of the velocity change over time, from $t_i$ to $t_k$:

$$\int_{t_i}^{t_k} \Delta v|_{t_i}^{t} dt = \int_{t_i}^{t_k} v\, dt - (t_k - t_i)v|_{t_i} \tag{4}$$

In some embodiments, the velocity change vector is time integrated using numerical time-integration schemes known to the art, such as the Trapezoidal Integration scheme:

$$\int_{t_i}^{t_k} \Delta v|_{t_i}^{t} dt = \frac{t_k - t_i}{2}\big(v|_{t_k} + v|_{t_i}\big) - (t_k - t_i)v|_{t_i} = \frac{t_k - t_i}{2}\Delta v|_{t_i}^{t} \tag{5}$$

where equation (1) was used.
In the following, the velocity change vector (or delta velocity vector) might sometimes be written as $\Delta v$ for simplicity of the mathematical description, and the additional indices are only included in the notation if necessary.
In one embodiment (which is in line with Fig. 1c), the estimated velocity change and estimated time-integrated velocity change of the NSS receiver reference point are computed further (i) based on a process using an additional sensor (which may be part of sensor set A) for computing a coordinate transformation for transforming the change in velocity of the NSS receiver reference point determined by sensor set A to coordinates matching a definition of a state parameter subset of NSS estimator 10; or (ii) based on a process using a model for computing a coordinate transformation for transforming the change in velocity of the NSS receiver reference point determined by sensor set A to coordinates matching a definition of a state parameter subset of NSS estimator 10; or (iii) based on knowledge of a motion constraint for computing a coordinate transformation for transforming the change in velocity of the NSS receiver reference point determined by sensor set A to coordinates matching a definition of a state parameter subset of NSS estimator 10. In such a process, a coordinate transformation is computed for transforming the velocity-change measured by sensor set A to coordinates matching the definition of the state parameter subset of NSS estimator 10. For that, (i) at least one other sensor (e.g. magnetometer), which may be part of sensor set A, (ii) a model, or (iii) knowledge of a motion constraint is used. For example, for possibility (iii), the direction of an axis of sensor set A may be known in the g-frame (geographic frame), which is the frame matching the definition of the state parameter subset of NSS estimator 10 (e.g., the ECEF frame or the NED frame).
For possibility (ii), i.e. using a model as mentioned above, a two-antenna NSS receiver may for example be used, and the vector between the antennas is known in sensor frame coordinates from the model (e.g. a CAD model) and measured in NSS coordinates.
One exemplary way of obtaining the delta-velocity aiding data from the data from sensor set A and, optionally, the second NSS signals (and/or information derived therefrom) will now be described.
The velocity change of the NSS receiver reference point can be estimated in coordinates of a frame $g$ matching the definition of the state parameter subset of NSS estimator 10 (e.g., the ECEF frame or the NED frame). The velocity change vector in $g$-frame coordinates $\Delta v^g$ is computed from the velocity change determined using the data from the sensor, which can be represented as a 3D vector $\Delta v^s$ in coordinates of a frame s defined by the measurement axes of sensor set A. The coordinate transformation is computed e.g. by multiplication with a direction cosine matrix (DCM) matrix:

$$\Delta v^g = C_s^g \Delta v^s \qquad (6)$$

where $C_s^g$ is the s-to-g coordinate transform DCM.

Methods of determining the relative orientation of a sensor frame and the ECEF or NED frame for computing a coordinate transformation are well known in the art. The coordinate transformation, for example the s-to-g coordinate transform DCM, can be determined using two vectors with non-zero cross product (i.e. not parallel or anti-parallel), both vectors are determined (i) in coordinates of frame s (which may be referred to as "sensor frame" or "frame of sensor set A") based on data from sensor set A, or knowledge of a motion constraint limiting the degrees of freedom of sensor set A, or prior knowledge of this vector (e.g., knowledge from a model or knowledge about the mechanical installation), and (ii) in coordinates of frame g based on the second NSS signals or information derived from the second NSS signals (see above Fig. 1a), knowledge of a motion constraint limiting the degrees of freedom of sensor set A (see above Fig. 1c), or prior knowledge of this vector (see above Fig. 1c). For example, any two of the following can be used if not parallel or anti-parallel:

- The direction of the vertical, determined in the frame of sensor set A by measuring gravity and using a gravity model in the g-frame;
- The direction of an axis of sensor set A, if it is known in the g-frame. For example if the degrees of freedom of motion of sensor set A is reduced by a rotational constraint;
- The direction of the vector from a first to a second NSS antenna, known in the frame of sensor set A and measured in the g-frame using the second NSS signals or information derived from the second NSS signals;
- The direction of the magnetic field vector, measured in coordinates of the sensor frame using a magnetometer and determined in g-frame coordinates using a model (e.g. a model for the Earth magnetic field);
- The direction of the delta-velocity vector, measured with sensor set A and determined in g-frame coordinates using the second NSS signals or information derived from the second NSS signals;
- The direction of velocity, determined in g-frame coordinates using the second NSS signals or information derived from the second NSS signals and known in the frame of sensor set A based on knowledge of the motion of sensor set A, for example if the degrees of freedom of motion of sensor set A is reduced by a non-holonomic constraint;
- Any one of the above vectors at a previous point in time, if that vector changed over time in the coordinates of the g frame and in the coordinates of the frame of sensor set A, determined using a transformation accounting for the rotation of the g-frame and the frame of sensor set A since the previous point in time, as determined based on for example measurements of the angular motion of sensor set A with respect to inertial space (using an IMU) and accounting for the Earth rotation and transport rate of the g-frame.
- Other possibilities are known to the art, e.g. Earth rate vector or vectors determined based on visual sensing.

With unit vectors $u_0$ and $u_1$ corresponding the directions of the any two vectors with non-zero cross product, another frame m can be defined and the rotations between m and s and g can be determined using the unit vectors in coordinates of sensor set A's frame ($u_0^s$, $u_1^s$) and in coordinates of the g-frame ($u_0^g$, $u_1^g$). DCM for m-to-s coordinate transform and m-to-g coordinate transform can be computed as:

$$C_m^s = \begin{bmatrix} u_0^s & u_0^s \times u_1^s & u_0^s \times (u_0^s \times u_1^s) \end{bmatrix} \qquad (7)$$

$$C_m^g = \begin{bmatrix} u_0^g & u_0^g \times u_1^g & u_0^g \times (u_0^g \times u_1^g) \end{bmatrix} \qquad (8)$$

The s-to-g coordinate transform DCM can be computed as

$$C_s^g = C_m^g C_m^{s\,T} \qquad (9)$$

For a more accurate time integration of the velocity change vector in g-frame coordinates $\Delta v^g$, the change in time of the coordinate transformation, for example the s-to-g coordinate transform DCM, can be determined based on the rotation of the g-frame and the frame of sensor set A, as determined based on for example measurements of the angular motion of sensor set A with respect to inertial space (using an IMU) and accounting for the Earth rotation and transport rate of the *g*-frame. This rotation is used to time-update the coordinate transformation. The time-updated coordinate transform can be used for numerical time integration of the velocity change with better accuracy, for example using the trapezoidal integration scheme known to the art.

As known to the art, the time-updated coordinate transform can be combined with new knowledge derived from observations of the vectors described above using a data fusion technique, such as the Kalman filter.

In one embodiment, the method is performed at least partially as part of a data post-processing process. In other words, the invention is not limited to a real-time operation. Rather, it may be applied for processing pre-collected data to determine a position, trajectory, or other information, in post-processing. For example, the observations may be retrieved from a set of data which was previously collected and stored; the processing may be conducted for example in an office computer long after the data collection and thus not in real-time.

In one embodiment (which may be referred to as "reverse-time, post-processing embodiment"), the method is performed at least partially in a post-processing manner (as explained in the preceding paragraph), and the epochs are processed in reverse time. This reflects the possibility of running the method in reverse time. That is, for post-processing applications, the data, i.e. the NSS observables, etc., can effectively be run backwards, and all of what is described in the present document can still be applied.

In one embodiment, the method is performed in both forward and reverse time post-processing. This may be advantageous in that, in a forward processing run, it takes time to resolve integer carrier phase ambiguities immediately following some tracking interruption, such as that caused by an overpass. These data segments can often be populated with integer resolved solutions when processing in reverse time.

In one embodiment of the invention (not illustrated in the drawings), any of the methods described with reference to Figs. 1a, 1b, and 1c may comprise a step of observing NSS signals. That is, in this embodiment, steps s10 and s20 are carried out at least by an NSS receiver, and the NSS receiver also observes NSS signals.

In another embodiment of the invention (not illustrated in the drawings), an NSS receiver observes NSS signals and the NSS receiver transmits data representing the observed NSS signals, or information derived therefrom, to another processing entity or set of processing entities in charge of carrying out steps s10 and s20, which then receives the data representing the observed NSS signals, or information derived therefrom.

The data representing the observed NSS signals, or information derived therefrom, may for example be transmitted from the NSS receiver in the form of data packets, such as IP packets, through, for example, any one of, or a combination of, the Internet, a cellular network, and a suitable satellite link. The skilled person would, however, appreciate that other forms of wired or wireless transmission may be used, such as, and without being limited to, wireless transmissions based on Bluetooth, Wi-Fi, or Li-Fi. In one embodiment, the data representing the observed NSS signals is transmitted in real-time, i.e. as soon as available (in line with the above-mentioned definition of the term "real-time"). In one embodiment, the data representing the observed NSS signals is transmitted as a data stream in that messages containing said data are transmitted at regular or irregular intervals through the same communication medium or channel. The data representing the observed NSS signals may be encoded and/or encrypted prior to transmission.

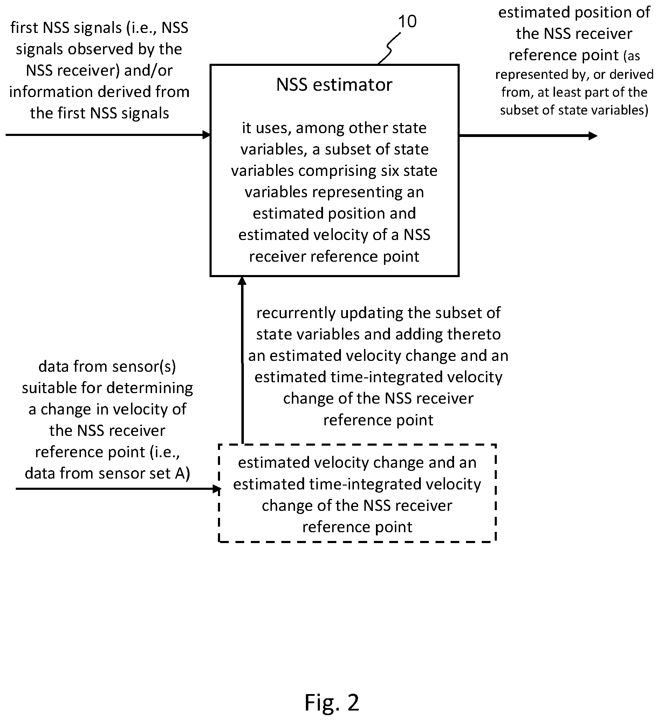

Fig. 2 is a schematic diagram of a method in one embodiment of the invention, which differs from Fig. 1c in that the method further comprises outputting, by NSS estimator 10, an estimated position of the NSS receiver reference point as represented by, or derived from, at least part of the subset of state variables. The invention is not limited thereto, however. Rather than outputting an estimated position of the NSS receiver reference point, NSS estimator 10 may, in one embodiment, output one of, or any combination of: clock estimates, corrected pseudoranges, estimated satellites biases, information usable to estimate a position, and other parameters.

In one embodiment, the outputted estimated position of the NSS receiver reference point is or comprises an estimated position of an APC of the NSS receiver.

The expression "represented by, or derived from" means that the estimated position may but need not originate directly from the state variables. For example, NSS estimator 10 may comprise a Kalman filter bundled together with an additional processing unit using the values of the state variables to derive further values. The processing unit may for example use both an estimated position and an estimated velocity to derive therefrom an estimated position of the NSS receiver reference point at a point in time which precedes or follows the point in time to which the estimated position represented by the state variable relates.

In a further embodiment, the embodiments of Figs. 1a and 2 are combined.

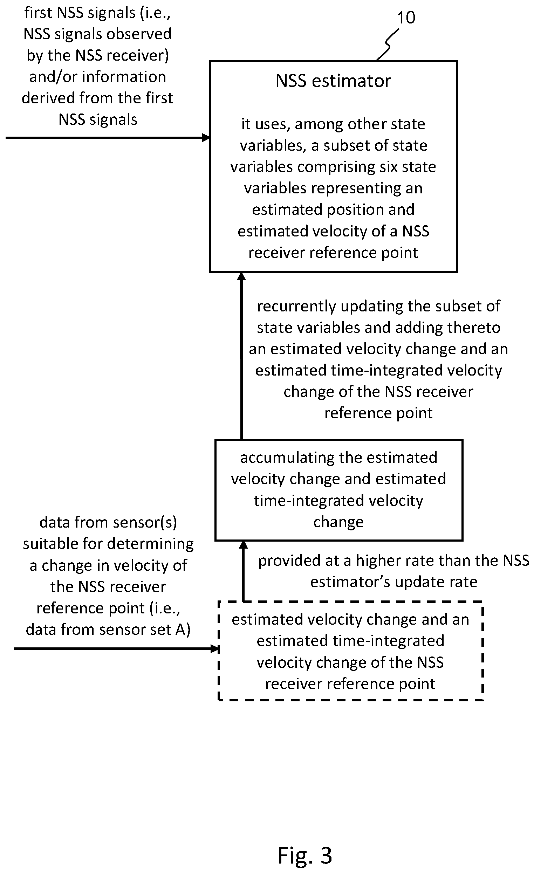

Fig. 3 is a schematic diagram of a method in one embodiment of the invention, which differs from Fig. 1 in that the estimated velocity change and estimated time-integrated velocity change of the NSS receiver reference point are provided to NSS estimator 10 at a higher rate than the NSS estimator's 10 update rate, and in that the method further comprises accumulating the estimated velocity change and estimated time-integrated velocity change of the NSS receiver reference point prior to updating s20 the subset of state variables using the estimated velocity change and estimated time-integrated velocity change of the NSS receiver reference point.

In one embodiment, the accumulation of delta velocity aiding data is performed as described in section B.2 below.

In a further embodiment, the embodiments of Figs. 1a and 3 are combined.

Fig. 4 is a schematic diagram of a method in one embodiment of the invention, which differs from Fig. 1 in that sensor set A is or comprises an inertial measurement unit (IMU) 20 suitable for determining a change in velocity of an APC of the NSS receiver. In one embodiment, IMU 20 is rigidly attached to an antenna or antennas of the NSS receiver. The attachment may be direct or indirect. For example, the NSS receiver's antenna(s) may be mounted on the roof of a vehicle while IMU 20 may be attached to the vehicle's body (or frame) without necessarily being mounted on its roof.

In a further embodiment, the embodiments of Figs. 1a and 4 are combined.

Fig. 5 is a schematic diagram of a method in one embodiment of the invention, which differs from Fig. 1 in that it further comprises operating a second estimation process, hereinafter referred to as "delta-velocity estimator" 30. Delta-velocity estimator 30 uses state variables and computes values of its state variables based on (a) the above-described data from sensor set A, and (b) the above-described at least one of: second NSS signals and information derived therefrom (although item (b) is optional, as explained above with reference to Fig. 1c). Further, the delta-velocity aiding data, i.e. the estimated velocity change and estimated time-integrated velocity change of the NSS receiver reference point, as described with reference to Fig. 1, is outputted by delta-velocity estimator 30. In one embodiment, delta-velocity estimator 30 uses (a) the data from sensor set A, and (b) the second NSS signals and/or information derived therefrom, to determine the orientation of sensor set A with respect to a frame that NSS estimator 10 uses.

In one embodiment, delta-velocity estimator 30 has no other use than providing the delta-velocity aiding data, i.e. the estimated velocity change and estimated time-integrated velocity change. That is, in that embodiment, delta-velocity estimator 30 does not provide additional outputs to, for example, a user such as a position estimate.

In one embodiment, delta-velocity estimator 30 is implemented as described in ref. [7], paragraphs [0084]-[0093], and schematically illustrated in ref. [7], Fig. 5, and/or as described in sections E and F below. Namely, delta-velocity estimator 30 may be an aided INS (AINS) as schematically illustrated in ref. [7], Fig. 5, in which one of the aiding sensors is a GNSS (i.e. GNSS-AINS). The concept of "aiding sensors" may, however, be extended to include motion constraints. A motion constraint can be considered a virtual sensor where the measurement data is known (e.g., zero velocity of a car's rear wheels in lateral direction).

Specifically, delta-velocity estimator 30 may compute an estimated velocity change (which may also be simply referred to as "delta-velocity"; regarding the computation, see also sections B.3 and D below) and an estimated time-integrated velocity change (which may also be simply referred to as "integrated delta-velocity") of the NSS receiver reference point, plus covariance, over consecutive time intervals. In ref. [7], paragraphs [0085]-[0086], it is explained that the AINS causes "INS alignment" to be continuously corrected. See also sections E and F below. This includes the "North and down directions", which in combination with the position, represent the desired information about how the IMU measurement axes are oriented with respect to the earth coordinate frame (e.g. ECEF). Any further transformation and/or rotation to the specific coordinate frame used for the velocity states in the NSS estimation is well within the ability of the skilled person.

The invention is not limited, however, to the use of a delta-velocity estimator 30 to determine the orientation of sensor set A with respect to a frame that NSS estimator 10 uses. There are other possibilities. A GNSS position vector between two antennas or the heading of this vector may be used ("GNSS heading"), as described above (see for example description of Fig. 1c, and more precisely: process using a model in accordance with "possibility (ii)"). A GNSS position or velocity or track angle may alternatively be used in combination with a motion constraint suitable for deriving IMU heading (see for example description of Fig. 1c, and more precisely: knowledge of a motion constraint in accordance with "possibility (iii)").

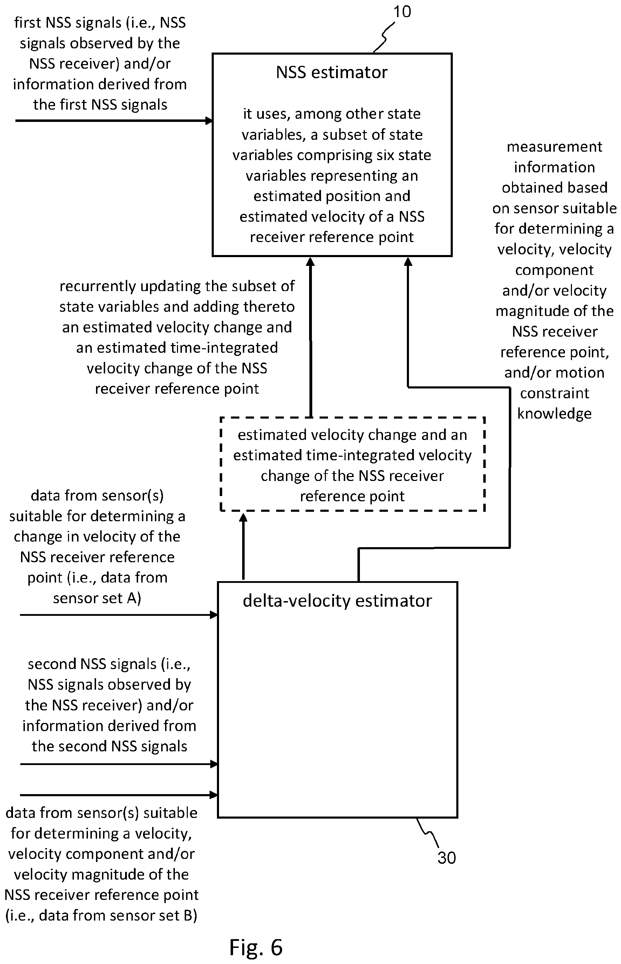

Fig. 6 is a schematic diagram of a method in one embodiment of the invention, which differs from Fig. 1a in that it further comprises providing, from delta-velocity estimator 30 to NSS estimator 10, information obtained based on at least one of: (i) at least one sensor suitable for determining at least one of a velocity, a velocity component, and a velocity magnitude of the NSS receiver reference point; and (ii) knowledge of at least one motion constraint suitable for providing information on an estimated velocity of the NSS receiver reference point. For the sake of conciseness, the at least one sensor suitable for determining at least one of a velocity, a velocity component, and a velocity magnitude of the NSS receiver reference point is hereinafter referred to as "sensor set B", and the at least one motion constraint suitable for providing information on an estimated velocity of the NSS receiver reference point is hereinafter referred to as "motion constraint set B". In other words, in the embodiment illustrated with reference to Fig. 6, delta-velocity estimator 30 generates velocity information aiding data based on (i) information from sensor set B and/or (ii) knowledge that motion constraint set B is applicable, in addition to the data from sensor set A (as described with reference to Figs. 1a, 1b, and 1c) and, optionally, the second NSS signals (as described also with reference to Figs. 1a and 1b). This allows for the extraction of information about velocity of the NSS receiver reference point that is independent from the NSS-based information. NSS estimator 10 may then apply measurement updates to inject the aiding information.

Here, the expression "at least one sensor suitable for determining at least one of a velocity, a velocity component, and a velocity magnitude of the NSS receiver reference point", i.e. sensor set B, means: at least one sensor suitable for providing at least some information about the velocity of the NSS receiver reference point. That is, the provided information could also be partial information, such as for example just information about velocity in one spatial direction, or information about speed (magnitude of velocity vector). This suffices to result in velocity information aiding data that can be transferred to the NSS estimator 10 with a measurement update, as indicated for example by mapping matrix $M_{meas}$ in equation (30) in section B.4 below.

In one embodiment, sensor set B comprises at least one of an odometer (also called distance measurement instrument or wheel odometer), a radar sensor, a camera, and a lidar. In one embodiment, the information transfer is performed by extracting aiding information ("velocity information") from the a *priori* and a *posteriori* states of the delta-velocity estimator 30. In one embodiment, the velocity information transfer is performed as described in section B.4 below.

In one embodiment, delta-velocity estimator 30 generates velocity information aiding data with an AINS as described in ref. [7], paragraphs [0084]-[0093], as well as in sections E and F below. Namely, aiding sensors (and motion constraints) other than the GNSS are used. Ref. [7], paragraph [0089], describes the measurement update for the error estimator. For the estimator types such as a Kalman filter, an unscented Kalman filter, a particle filter, or an M-estimator (see section F below), the INS state space (or INS error state space as described in ref. [7], paragraph [0089]) of such an estimator can be mapped to the antenna position and velocity (error) state space (or a subspace thereof, e.g. only one component of velocity vector). This gives the mapped estimate of antenna position and velocity (adding the antenna position and velocity as computed by the inertial navigator to the errors if applicable). A skilled person would also understand how a corresponding covariance matrix can be extracted from the estimation of the mentioned types, both before and after a measurement update is computed. From there, equations (25) to (34) in section B.4 may be used.

In a further embodiment, the embodiments of Figs. 1c and 6 are combined, which means that inputting the second NSS signals into delta-velocity estimator 30 is optional.

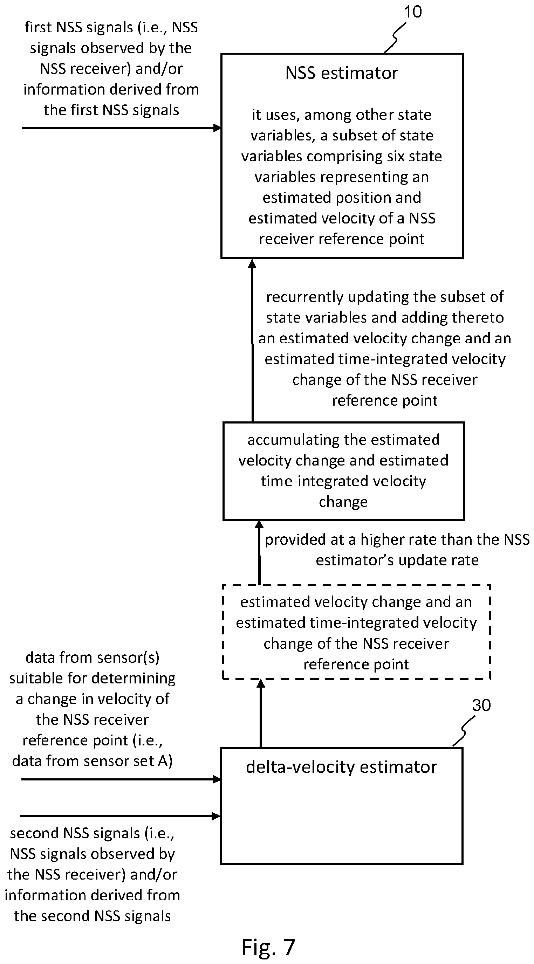

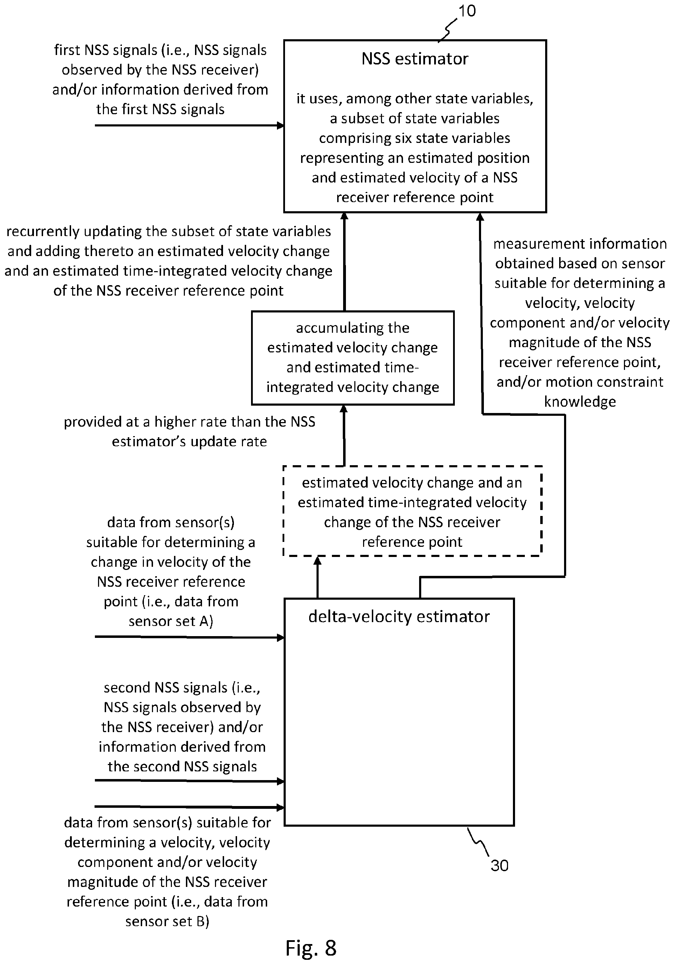

Fig. 7 is a schematic diagram of a method in one embodiment of the invention, which combines the embodiments described with reference to Figs. 1a, 3 and 5. In a further embodiment, the embodiments of Figs. 1c and 7 are combined, which means that inputting the second NSS signals into delta-velocity estimator 30 is optional. Fig. 8 is a schematic diagram of a method in one embodiment of the invention, which combines the embodiments described with reference to Figs. 1a, 3 and 6. In a further embodiment, the embodiments of Figs. 1c and 8 are combined, which means again that inputting the second NSS signals into delta-velocity estimator 30 is optional.

Before discussing further embodiments of the invention, let us now further briefly explain, in section A below, the context in which some embodiments of the invention have been developed, for a better understanding thereof.

## A. Methods for propagating APC position in a GNSS estimation process

To propagate an APC position in a GNSS estimation process, a stochastic dynamic model (not part of the invention) may be used: This method may suffer, however, from a low accuracy. This is because it introduces notable errors whenever the true APC motion differs from the assumed dynamics (e.g., random acceleration as described in ref. [2b], section 9.4.2.2).

Another method is to use an INS error state model (not part of the invention) as described in ref. [2b], Chapter 14. This method typically requires the addition of fifteen states or more to the GNSS estimation process which generally results in a significant increase in processing load. The INS error state model contains a state for INS position error but not for the APC position. For the GNSS estimation process, a mapping from the INS error states to the APC position must be used which increases the complexity of the implementation.

In view of the considerations laid out in above section A, let us now describe further embodiments of the invention, together with considerations regarding how these embodiments may be implemented, for example, by software, hardware, or a combination of software and hardware.

## B. Further embodiments

In some embodiments of the invention, a GNSS estimation process (i.e., a form of NSS estimator 10) uses a simple dynamic model for APC position and velocity in combination with aiding data from INS and multi-sensor estimation (i.e., this AINS estimation being a form of delta-velocity estimator 30) to derive accurate information about the antenna kinematics. This is an efficient way of integrating IMU and multi-sensor data with GNSS estimation, and this offers a good combination of accuracy, simplicity and processing efficiency.

The method reduces the state model using fifteen or more states needed for full GNSS/INS integration (see above section A) to a six-state model for the APC position and velocity. Using aiding data, the reduced model provides almost the same accuracy of modeling uncertainty growth in position and velocity estimates in the time update step as the full model for INS and IMU errors. This is rendered possible by estimating the velocity change of the APC based on the IMU data and other multi-sensor information in a separate process and buffering and accumulating (if needed) this aiding information for use in the time propagation of the reduced model used in the GNSS estimation.

In addition to the aiding of the time update, further information from auxiliary measurements in the INS and multi-sensor estimation may be transferred to the APC position and velocity dynamic model using a method based on the information update matrix and vector. Depending on the original multi-sensor measurement, the information can be projected to the APC velocity solution space. This velocity information transfer can be used to fuse the multi-sensor data (e.g., wheel sensor measurements or optical position measurements) with the GNSS estimation.

B.1 Time update of the antenna dynamic model using delta velocity aiding data

In one embodiment, the motion of the APC is modeled in the GNSS estimation (i.e., a form of NSS estimator 10) with a simple kinematic model for position ($p_{APC}$) and velocity ($v_{APC}$) assuming a constant velocity vector:

$$\dot{p}_{APC} = v_{APC} \qquad (10)$$

$$\dot{v}_{APC} = 0 \qquad (11)$$

Starting from the previous epoch estimate of the states of this kinematic model $p_{APC}(t_k)$ and $v_{APC}(t_k)$, the a *priori* estimate at the next epoch ($k + 1$) is computed by time-integration of the constant velocity model in a first step and the addition of an estimate of velocity change and time-integrated velocity change (i.e., the delta velocity aiding data) to the state vector and covariance in a second step.

The constant velocity time-integration (i.e., the time integration assuming constant velocity) is computed as follows:

$$p_{APC}(t_{k+1}) = p_{APC}(t_k) + \Delta t_k v_{APC}(t_k) \qquad (12)$$

$$v_{APC}(t_{k+1}) = v_{APC}(t_k) \qquad (13)$$

with the time step $\Delta t_k = t_{k+1} - t_k$. Equations 12 and 13 give the values that are applicable prior to correction (i.e., prior to the use of the delta-velocity aiding data), or without correction. The aiding correction, which provides accurate dynamical information (i.e., the velocity is no longer considered constant), is applied by updating the values as follows (the arrow $\rightarrow$ indicating a replacement of the left hand side value with a value computed from the right hand side expression):

$$p_{APC}(t_{k+1}) \rightarrow p_{APC}(t_{k+1}) + \int_{t_k}^{t_{k+1}} \Delta v_{APC}\big|_{t_k}^{t} dt \qquad (14)$$

$$v_{APC}(t_{k+1}) \rightarrow v_{APC}(t_{k+1}) + \Delta v_{APC}\big|_{t_k}^{t_{k+1}} \qquad (15)$$

where $\Delta v_{APC}\big|_{t_k}^{t_{k+1}}$ is the velocity change and $\int_{t_k}^{t_{k+1}} \Delta v_{APC}\big|_{t_k}^{t} dt$ is the time-integrated velocity change in the time interval from $t_k$ to $t_{k+1}$.

Velocity change and time-integrated velocity change for the APC are provided as aiding data including a six-dimensional covariance matrix which models the increase of velocity uncertainty in the delta time-step and the propagation of this increase to the position uncertainty, including the correlation between both. The aiding data is therefore a six-dimensional state solution comprising state vector and covariance matrix:

$$x_{aid}\big|_{t_k} = [\int_{t_k}^{t_{k+1}} \Delta v_{APC}\big|_{t_k}^{t} dt , \Delta v_{APC}\big|_{t_k}^{t_{k+1}}]^T \qquad (16)$$

$$P_{aid}\big|_{t_k} = Var[x_{aid}\big|_{t_k}] \qquad (17)$$

In matrix/vector notation, the aided time update (i.e., the recurrent update s20) of the six-dimensional state vector of the APC dynamic model $x_{dyn} = [p_{APC}{}^T, v_{APC}{}^T]^T$ may be represented as follows:

$$x_{dyn}\big|_{t_{k+1}} = \Phi_{dyn}\big|_{t_k}^{t_{k+1}} x_{dyn}\big|_{t_k} + x_{aid}\big|_{t_k} \qquad (18)$$

with the constant velocity model transition matrix $\Phi_{dyn}\big|_{t_k}^{t_{k+1}} = [I, \Delta t_k; 0, I]$ , and the identity matrix I.

The covariance $P_{dyn} = Var[x_{dyn}]$ may also be updated as follows:

$$P_{dyn}\big|_{t_{k+1}} = \Phi_{dyn}\big|_{t_k}^{t_{k+1}} P_{dyn}\big|_{t_k} \Phi_{dyn}^T\big|_{t_k}^{t_{k+1}} + P_{aid}\big|_{t_k} \qquad (19)$$

Thanks to the additive nature of the aiding for the dynamic model time update, the implementation can be partitioned into a conventional time update of a constant velocity dynamic model followed by a control vector update (which amounts to perform a vector addition, i.e. shifting the state vector) and correlated noise update.

Now as a possible realization of the embodiment described above with reference to Fig. 5 (i.e., using a delta-velocity estimator 30 for computing the delta-velocity aiding data), in the transfer of aiding information from the INS and multisensor estimation to the antenna dynamic model of the GNSS estimation, the correlation of error in consecutive delta velocity estimates is neglected in the implementation described above. The correlation of error in consecutive delta velocity estimates is due to the non-whiteness of INS velocity error drift in the INS and multi-sensor estimation (plus other error sources that map to APC velocity error). For example, the error in velocity computed from unaided INS may drift primarily due to the following terms in the computer frame velocity error (or velocity error resolved in the computer frame, see ref. [17]) time derivative:

- changing tilt misalignment of the computed gravity vector or changing accelerometer measurement error (hence the two effects do not cancel out);
- azimuth misalignment of computed horizontal specific force in presence of dynamical horizontal motion of the IMU due to INS heading error; and
- height error and gravity deflections.

Velocity error drift results in correlation of consecutive delta velocity estimates due to the time integration of velocity rate (which includes velocity error drift) to velocity change. Note that continuous observation of the computer frame velocity error (e.g. with GNSS measurements in the aided INS) constrains the combination of all sources of velocity error drift mentioned above. Continuous observation of modified velocity error (e.g. with wheel sensor measurements in combination with non-holonomic constraints) constrains the combination of gravity tilt misalignment, accelerometer measurement error and gravity deflections (see ref. [17]). By continuously observing them, the aided INS can estimate and correct these sources of error in the delta velocity estimates. Consequently, the correlation of error in consecutive transfer of aiding information can be neglected. A skilled person would also understand that the time correlation of error in delta velocity estimates from the aided INS is smaller than in e.g. position estimates, due to the lower order of time integration.

The aided time update (i.e., the recurrent update s20) of the antenna dynamic model described above allows the estimation of instantaneous velocity from positionbased observations in the GNSS estimation because the correlation of position with instantaneous velocity is accurately modeled. This generally improves the integration of e.g. delta-phase and Doppler measurements in a single GNSS estimation compared to methods using only constant velocity propagation.

B.2 Accumulation of delta velocity aiding data

Consecutive samples of aiding data $x_{aid}\big|_{t_k}, x_{aid}\big|_{t_{k+1}}, \ldots, x_{aid}\big|_{t_{k+n-1}}$ for time steps $\Delta t_k = t_{k+1} - t_k$ can be accumulated to generate aiding data that can be used for an antenna dynamic model running with larger time steps $\Delta t' = t_{k+n} - t_k$. In one embodiment, this may be done by iteratively applying the following steps:
The delta velocity vector can be accumulated as follows:

$$\Delta v\big|_{t_k}^{t_{k+2}} = \Delta v\big|_{t_k}^{t_{k+1}} + \Delta v\big|_{t_{k+1}}^{t_{k+2}} \qquad (20)$$

Integrated delta velocity vector is accumulated as follows:

$$\int_{t_k}^{t_{k+2}} \Delta v|_{t_k}^t \, dt = \int_{t_k}^{t_{k+1}} \Delta v|_{t_k}^t \, dt + \int_{t_{k+1}}^{t_{k+2}} \Delta v|_{t_{k+1}}^t \, dt + \Delta t_{k+1} \Delta v|_{t_k}^{t_{k+1}} \qquad (21)$$

The covariance matrix blocks are accumulated as follows:

$$Var[\Delta v|_{t_k}^{t_{k+2}}] = Var[\Delta v|_{t_k}^{t_{k+1}}] + Var[\Delta v|_{t_{k+1}}^{t_{k+2}}] \qquad (22)$$

$$Var[\int_{t_k}^{t_{k+2}} \Delta v|_{t_k}^t \, dt] = Var[\int_{t_k}^{t_{k+1}} \Delta v|_{t_k}^t \, dt] + Var[\int_{t_{k+1}}^{t_{k+2}} \Delta v|_{t_{k+1}}^t \, dt] \qquad (23)$$

$$+\Delta t_{k+1}{}^2 Var[\Delta v|_{t_k}^{t_{k+1}}] + \Delta t_{k+1} Cov[\int_{t_k}^{t_{k+1}} \Delta v|_{t_k}^t \, dt , \Delta v|_{t_k}^{t_{k+1}}]$$

$$+\Delta t_{k+1} Cov[\int_{t_k}^{t_{k+1}} \Delta v|_{t_k}^t \, dt , \Delta v|_{t_k}^{t_{k+1}}]^T$$

$$Cov[\int_{t_k}^{t_{k+2}} \Delta v|_{t_k}^t \, dt , \Delta v|_{t_k}^{t_{k+2}}] = Cov[\int_{t_k}^{t_{k+1}} \Delta v|_{t_k}^t \, dt , \Delta v|_{t_k}^{t_{k+1}}] \qquad (24)$$

$$+Cov[\int_{t_{k+1}}^{t_{k+2}} \Delta v|_{t_{k+1}}^t \, dt , \Delta v|_{t_{k+1}}^{t_{k+2}}] + \Delta t_{k+1} Var[\Delta v|_{t_k}^{t_{k+1}}]$$

Similarly to the aiding of the antenna dynamic model time update described in section B.1, the correlation of error between consecutive samples of the aiding information is neglected in the accumulation steps described here.

B.3 Generation of delta velocity aiding data

In one embodiment, velocity change and time-integrated velocity change for a given time interval may be estimated by an AINS estimation (i.e., by a form of delta-velocity estimator 30 as described with reference to Figs. 5, 6, 7, and 8) which includes a model for the APC position and states for the APC position and velocity at the previous epoch. The aiding data for the antenna dynamic model used in NSS estimator 10 is extracted from the delta-velocity estimator 30 after the time update step as the difference between the current best estimate of APC velocity and the previous state and the difference between the current best estimate of APC position and the previous state minus the previous APC velocity times the delta time. The aiding information is extracted as a correlated 6-DOF state solution.

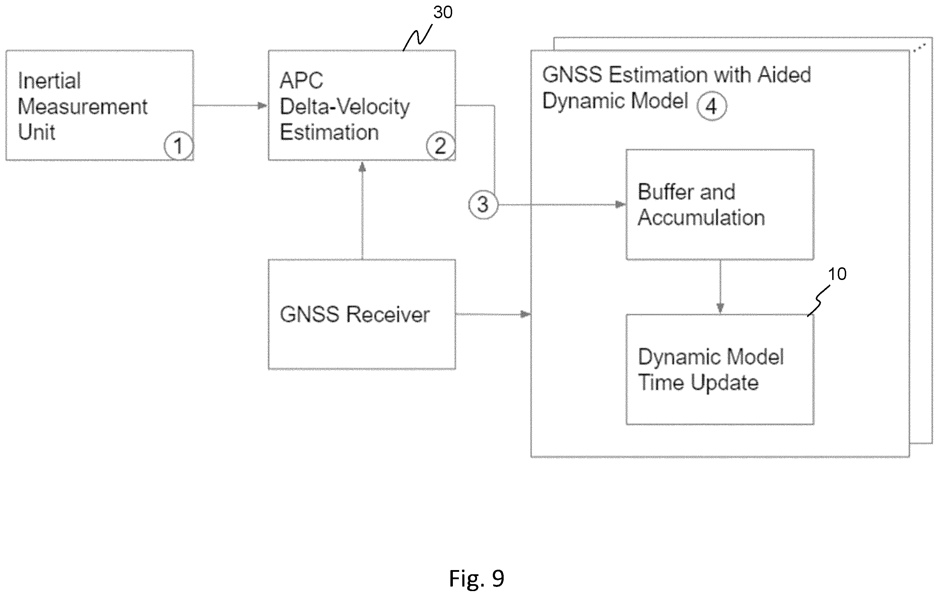

In one implementation, the delta-velocity estimator 30 may be replaced by a purpose-built estimation process for the APC delta-velocity, as shown in the schematic diagram of Fig. 9. The IMU measurements (circled "1" in Fig. 9) are fed into a specialized process (circled "2" in Fig. 9) which combines strapdown INS propagation, error estimation and control. The specialized process generates the aiding information (circled "3" in Fig. 9) at the lowest possible latency and the output rate required for the GNSS estimation (circled "4" in Fig. 9). This is further described in section D below. If the GNSS estimation is running at a lower rate (or if multiple GNSS estimators are using the aiding at different rates), the aiding information can be buffered and accumulated, as described in above section B.2.

B.4 Velocity information transfer to the NSS estimator 10

The velocity information provided from the delta-velocity estimator 30 to the NSS estimator 10 can be represented as a set of one or more measurements for the NSS estimator 10 comprising a measurement value (or measurement vector) $z_{meas}$, an observation vector (or matrix) $H_{meas}$ and a measurement noise variance (or diagonal matrix of measurement noise variance) $R_{meas}$. In combination, $z_{meas}$, $H_{meas}$ and $R_{meas}$ represent a "measurement model" (as described in ref. [2b], section 3.2.4) related to the subset of states of the NSS estimator 10 representing the position and velocity of the NSS receiver reference point. Updating the NSS estimator 10 using these measurements (or measurement model) with methods known to the art transfers (or provides) the velocity information (obtained based on at least one of (i) sensor set B and (ii) knowledge that motion constraint set B is applicable) from the delta-velocity estimator 30 to the estimate of the above-mentioned subset of states of the NSS estimator 10.

The velocity information aiding data in form of measurements ($z_{meas}$, $H_{meas}$ and $R_{meas}$) for the NSS estimator 10 can be generated with the delta-velocity estimator 30 as described in the following.

The delta-velocity estimator 30 computes estimates $x_s$ of the APC velocity and uses at least (i) information from sensor set B and/or (ii) knowledge that motion constraint set B is applicable to improve these estimates by processing state estimator updates. The estimates are extracted a *priori* and a *posteriori* (i.e. before and after the estimator update is processed) from the delta-velocity estimation, consisting of the vector $x_s$ with covariance:

$$x_s^-, P_s^- = Var[x_s^-] \tag{25}$$

$$x_s^+, P_s^+ = Var[x_s^+] \tag{26}$$

wherein the superscript " -" refers to a *priori* estimates and the superscript " +" refers to a *posteriori* estimates.

The information update vector $y$ and matrix $S$ are computed (see equations 3.3 and 3.10 in section 6.3 of ref. [6]) as follows:

$$y = (P_s^+)^{-1}x_s^+ - (P_s^-)^{-1}x_s^- \tag{27}$$

$$S = (P_s^+)^{-1} - (P_s^-)^{-1} \tag{28}$$

The inversion of covariance matrices is computationally affordable if the solution space s is small. This is the case for example for a three-dimensional solution space if the APC velocity information is extracted, which is suitable for transferring information from e.g. wheel sensor measurement updates.

The extracted velocity information can be injected into the NSS estimator 10 for example as a conventional Kalman filter measurement. The measurement vector, diagonal measurement noise variance matrix, and observation matrix are computed from the information vector and matrix in a robust manner which accounts for the possibility of non-empty null space in the information (i.e. no information for part of the solution space $s$).

First, the information matrix $S$ is decomposed into the left or right orthogonal matrix and the diagonal matrix parts using a suitable method such as Eigen or singular value decomposition (SVD):

$$S \rightarrow H^T, R^{-1}, H, such\ that\ H^T R^{-1} H = S \tag{29}$$

The measurement vector $z_{meas}$ for updating the NSS estimator 10 can then be computed as

$$z_{meas} = (M_{meas}R^{-1}M_{meas}{}^T)^{-1}M_{meas}Hy \tag{30}$$

where the mapping matrix $M_{meas}$ reduces the measurement state space to the measurements that provide information (i.e., dimensions $i$ with $(R^{-1})_{ii} > 0$). The delta-velocity estimator 30 uses at least (i) information from sensor set B and/or (ii) knowledge that motion constraint set B is applicable, so that the information matrix $S$ is not null and consequently $z_{meas}$ is at least of dimension 1.

The measurement noise variance matrix and observation matrix for updating the NSS estimator 10 are

$$R_{meas} = (M_{meas}R^{-1}M_{meas}{}^T)^{-1} \tag{31}$$

$$H_{meas} = M_{meas}H \tag{32}$$

The diagonal property of $R^{-1}$ is maintained in the mapping and inversion (31) and $R_{meas}$ is diagonal as well. Consequently, $z_{meas}$, $H_{meas}$ and $R_{meas}$ represent a set of uncorrelated scalar measurements which allows an efficient transfer of the aiding information to the NSS estimator 10 by means of a measurement update (ref. [2b], Chapter 3) following the time-update and correction steps in equations (18) and (19):

$$x_{dyn}\big|_{t_{k+1}} \rightarrow x_{dyn}\big|_{t_{k+1}} + K_{upd}(z_{meas} - H_{meas}x_{dyn}\big|_{t_{k+1}}) \qquad (33)$$

with the Kalman gain matrix $K_{upd} = P_{dyn}|_{t_{k+1}}H_{meas}{}^T(H_{meas}P_{dyn}|_{t_{k+1}}H_{meas}{}^T + R_{meas})^{-1}$.

The covariance may then be updated for example as follows:

$$P_{dyn}\big|_{t_{k+1}} \rightarrow (I - KH_{meas})P_{dyn}\big|_{t_{k+1}} \qquad (34)$$

C. Possible applications of some embodiments of the invention

An accurate propagation model for the APC position is beneficial in kinematic applications of GNSS positioning as it increases estimation robustness. One example of this is carrier-phase cycle slip detection based on an accurate estimate of position change and the change of carrier-phase measurement in the same time interval. If the measurement change exceeds 3-sigma of the estimated position change in direction of the line of sight to the satellite, a cycle slip can be declared with high confidence thus eliminating a faulty measurement before it affects the GNSS estimation. Both the delta-velocity aiding data and the velocity information aiding data provide information for accurate estimation of position change in the GNSS estimation.

The aiding data can also be beneficial in that it may lead to improved outlier detection using the a priori information. In other words, the method may improve the a priori knowledge of reference point position (i.e. before updating the estimation with GNSS measurements). This a priori knowledge allows detecting and rejecting GNSS measurement outliers with common methods (e.g. applying thresholds to the normalized measurement innovation).

These benefits can be realized for example in GNSS smart antennas which may employ inexpensive low-end IMUs or IMUs without temperature-bias compensation.

In addition, the better outlier detection using an aided antenna dynamic model leads to an improvement in the robustness of GNSS position estimation.

In one embodiment of the invention, the method for improving GNSS estimation with delta-velocity aiding data for the antenna motion derived from multisensor estimation can be applied to a processing architecture where the GNSS estimation runs in the cloud. It is better than a conventional integrated GNSS/multisensor estimation running in the cloud because there is much less data transfer for aiding data compared to the sensor measurements (IMU and odometry sensors).

D. Generation of delta-velocity aiding data with covariance

Without loss of generality, the ECEF frame may be chosen for parametrization of the APC position and velocity state model (see equations (10) and (11)) and the corresponding aiding data (see equations (16) and (17)). The APC velocity may, in one embodiment, be expressed as the sum of the IMU velocity in ECEF frame coordinates $v^e$ and the rotation of the constant IMU-to-APC lever arm $l^b$ as follows:

$$v_{APC}^e = v^e + C_b{}^e(\omega_{eb} \times l^b) \qquad (35)$$

with the IMU body frame to ECEF frame coordinate transform DCM $C_b{}^e$ and the angular rate vector $\omega_{eb}$.

The APC delta-velocity in ECEF coordinates can be computed from the typical INS data (see ref. [2b], chapter 5 and section 5.3 for example) and states at times $t_k$ and $t_{k+1}$ and the IMU-to-APC lever arm as follows:

$$\Delta v_{APC}^e\big|_{t_k}^{t_{k+1}} = \Delta v^e\big|_{t_k}^{t_{k+1}} + (C_b{}^e\big|_{t_{k+1}}[\omega_{eb}\big|_{t_{k+1}} \times] - C_b{}^e\big|_{t_k}[\omega_{eb}\big|_{t_k} \times])l^b \qquad (36)$$

with the skew-symmetric matrix representation of the angular rate vector cross product $[\omega_{eb} \times]$.

For the time-integrated APC delta-velocity in ECEF coordinates

$$\int_{t_k}^{t_{k+1}} \Delta v_{APC}^e |_{t_k}^t dt = \int_{t_k}^{t_{k+1}} (v_{APC}^e - v_{APC}^e |_{t_k}) dt \tag{37}$$

$$= \int_{t_k}^{t_{k+1}} (v^e + C_b^{\,e} (\omega_{eb} \times l^b)) dt - \Delta t_k (v^e |_{t_k} + C_b^{\,e} |_{t_k} (\omega_{eb} |_{t_k} \times l^b))$$

$$= \Delta p^e |_{t_k}^{t_{k+1}} + \int_{t_k}^{t_{k+1}} C_b^{\,e} [\omega_{eb} \times] dt\, l^b - \Delta t_k (v^e |_{t_k} + C_b^{\,e} |_{t_k} (\omega_{eb} |_{t_k} \times l^b))$$

$$= \Delta p^e |_{t_k}^{t_{k+1}} + (C_b^{\,e} |_{t_{k+1}} - C_b^{\,e} |_{t_k}) l^b - \Delta t_k (v^e |_{t_k} + C_b^{\,e} |_{t_k} (\omega_{eb} |_{t_k} \times l^b))$$

where $\Delta p^e |_{t_k}^{t_{k+1}}$ is the change of IMU ECEF position $p^e$ in the time interval from $t_k$ to $t_{k+1}$.

For computing the associated covariance matrix (17), a linear mapping matrix $M_{k,k+1}$ to the states of an INS estimator may be used

$$P_{aid} |_{t_k} = M_{k,k+1} Var[x_{INS} |_{t_k}] M_{k,k+1}^T + Q_{k,k+1} \tag{38}$$

where $Q_{k,k+1}$ represents a covariance addition matrix due to uncorrelated errors.

Without loss of generality, this mapping is derived for an INS error estimator in the following. A typical definition of INS error states is used

$$x_{INS} = [\delta p_e^{\,T}, \delta v_e^{\,T}, \psi^T, \delta f_b^{\,T}, \delta \omega_{eb}^{\,T}]^T \tag{39}$$

where a $\delta$ indicates an error quantity and the common definition that a computed value equals a true value plus error is adopted. The orientation error vector $\psi$ is defined as the rotation vector such that the true IMU body frame to ECEF frame coordinate transform DCM can be factorized as follows:

$$C_b^{\,e} = (I + sin|\psi| [(\psi/|\psi|) \times] + (1 - cos|\psi|)[(\psi/|\psi|) \times]^2) \hat{C}_b^{\,e} \tag{40}$$

The indicates a computed value and $\hat{C}_b^e$ is the computed IMU body frame to ECEF frame coordinate transform DCM.

The computed APC delta-velocity in ECEF coordinates can be linearized with respect to the INS errors:

$$\Delta \hat{v}_{APC}^e |_{t_k}^{t_{k+1}} = \Delta v_{APC}^e |_{t_k}^{t_{k+1}} \tag{41}$$

$$+ \delta v_e |_{t_{k+1}} - [\psi |_{t_{k+1}} \times] \hat{C}_b^{\,e} |_{t_{k+1}} [\hat{\omega}_{eb} |_{t_{k+1}} \times] l^b + \hat{C}_b^{\,e} |_{t_{k+1}} [\delta \hat{\omega}_{eb} |_{t_{k+1}} \times] l^b$$

$$- \delta v_e |_{t_k} + [\psi |_{t_k} \times] \hat{C}_b^{\,e} |_{t_k} [\hat{\omega}_{eb} |_{t_k} \times] l^b - \hat{C}_b^{\,e} |_{t_k} [\delta \hat{\omega}_{eb} |_{t_k} \times] l^b + H.O.T.$$

where all terms of higher order in the INS errors are not written out in detail but abbreviated as "H.O.T.". A rearrangement of the right-hand side of equation (41) in matrix-vector form is straightforward, defining a new matrix $A = [0, I, [(\hat{C}_b^e (\hat{\omega}_{eb} \times l^b)) \times], 0, -\hat{C}_b^e [l^b \times]$.

$$\Delta \hat{v}_{APC}^e |_{t_k}^{t_{k+1}} = \Delta v_{APC}^e |_{t_k}^{t_{k+1}} + A_{k+1} x_{INS} |_{t_{k+1}} - A_k x_{INS} |_{t_k} + H.O.T. \tag{42}$$

Further simplification is possible using the linear transition model for the INS error states

$$x_{INS}|_{t_{k+1}} = \Phi_{INS}|_{t_k}^{t_{k+1}} x_{INS}|_{t_k} + v_{k,k+1} \tag{43}$$

with the INS transition matrix $\Phi_{INS}|_{t_k}^{t_{k+1}}$ and the system noise input vector $v_{k,k+1}$ for the timestep $t_k$ to $t_{k+1}$.

This gives

$$\Delta\hat{v}_{APC}^e|_{t_k}^{t_{k+1}} = \Delta v_{APC}^e|_{t_k}^{t_{k+1}} + B_{k,k+1} x_{INS}|_{t_k} + A_{k+1} v_{k,k+1} + H.O.T. \tag{44}$$

with $B_{k,k+1} = A_{k+1}\Phi_{INS}|_{t_k}^{t_{k+1}} - A_k$.

The linearization of time-integrated APC delta-velocity in ECEF coordinates is

$$\int_{t_k}^{t_{k+1}} \Delta\hat{v}_{APC}^e|_{t_k}^t dt = \int_{t_k}^{t_{k+1}} \Delta v_{APC}^e|_{t_k}^t dt + \delta p_e|_{t_{k+1}} - [\psi|_{t_{k+1}} \times]\hat{C}_b^e|_{t_{k+1}} l^b \tag{45}$$

$$-\delta p_e|_{t_k} + [\psi|_{t_k} \times]\hat{C}_b^e|_{t_k} l^b$$

$$-\Delta t_k(\delta v_e|_{t_k} - [\psi|_{t_k} \times]\hat{C}_b^e|_{t_k}[\hat{\omega}_{eb}|_{t_k} \times]l^b + \hat{C}_b^e|_{t_k}[\delta\omega_{eb}|_{t_k} \times]l^b)$$

$$+ H.O.T.$$

Introducing matrices $C = [I, 0, [(\hat{C}_b^e l^b) \times], 0,0]$ and $A$ as defined above, the linearization is rearranged

$$\int_{t_k}^{t_{k+1}} \Delta\hat{v}_{APC}^e|_{t_k}^t dt \tag{46}$$

$$= \int_{t_k}^{t_{k+1}} \Delta v_{APC}^e|_{t_k}^t dt + C_{k+1} x_{INS}|_{t_{k+1}} - C_k x_{INS}|_{t_k}$$

$$- \Delta t_k A_k x_{INS}|_{t_k} + H.O.T.$$

Again, the linear transition model for the INS error states (34) is inserted, defining a new matrix E

$$\int_{t_k}^{t_{k+1}} \Delta\hat{v}_{APC}^e|_{t_k}^t dt \tag{47}$$

$$= \int_{t_k}^{t_{k+1}} \Delta v_{APC}^e|_{t_k}^t dt + E_{k,k+1} x_{INS}|_{t_k} + C_{k+1} v_{k,k+1} + H.O.T.$$

with $E_{k,k+1} = C_{k+1}\Phi_{k,k+1} - C_k - \Delta t_k A_k$.

Finally, the covariance matrix of the aiding data (see equation (17)) can be computed from the covariance of the states of the INS estimator using equation (38) with

$$M_{k,k+1} = [E_{k,k+1}{}^T, B_{k,k+1}{}^T]^T \tag{48}$$

$$Q_{k,k+1} = [C_{k,k+1}{}^T, A_{k,k+1}{}^T]^T Var[v_{k,k+1}][C_{k,k+1}{}^T, A_{k,k+1}{}^T]$$

where the typical assumption was made that $v_{k,k+1}$ is not correlated with $x_{INS}|_{t_k}$.

E. Inertial Navigation System

An inertial navigation system (INS) is a navigation instrument that computes its navigation solution by propagating Newton's equations of motion using as inputs measured specific forces or incremental velocities from a triad of accelerometers and measured angular rates or incremental angles from a triad of gyros. A terrestrial INS is designed to navigate on the earth where it is subjected to gravity and earth rate. A celestial INS is designed to navigate in space where it is subjected to smaller gravitational forces from multiple celestial bodies. The present disclosure is concerned only with a terrestrial INS. The qualifier "terrestrial" is hereafter implied but not cited explicitly.

An INS can navigate with a specified accuracy after an initialization of the inertial navigator mechanization during which it determines its initial position, initial velocity and North and down directions to a specified accuracy that is commensurate with its inertial sensor errors. The term "alignment" is used to describe this initialization and any ongoing corrections of the inertial navigator mechanization. A free-inertial INS performs an initial alignment and then propagates its navigation solution with no further corrections. See ref. [8] for an overview of an INS. See refs. [9], [11], [12] for descriptions of inertial navigator equations and algorithms.

F. Aided INS

An aided INS (AINS) undergoes ongoing corrections to its inertial navigator mechanization to constrain the growth in inertial navigation errors. The AINS uses an error estimator to estimate INS errors and some means of INS error control to correct the INS errors. A so-called "closed-loop AINS" uses the estimated INS errors from the error estimator to correct the inertial navigator mechanization integrators. This causes the INS alignment to be continuously corrected, and as such is a method for achieving mobile alignment.

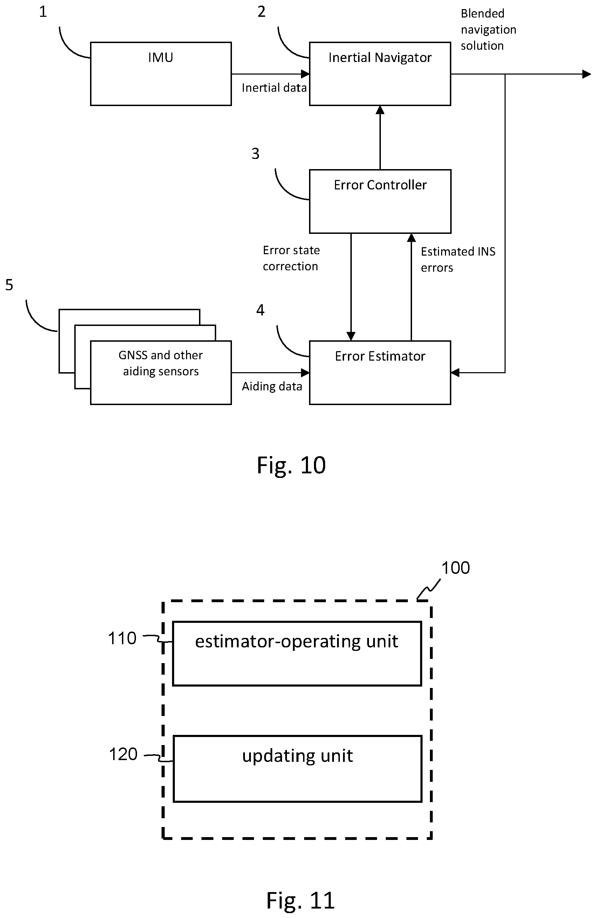

Fig. 10, which is a copy of Fig. 5 of ref. [7], shows a generic closed-loop AINS architecture. The inertial measurement unit (IMU) 1 generates incremental velocities and incremental angles at the IMU sampling rate, typically 50 to 500 samples per second. The corresponding IMU sampling time interval is the inverse of the IMU sampling rate, typically 1/50 to 1/1000 seconds. The incremental velocities are the specific forces from the IMU accelerometers integrated over the IMU sampling time interval. The incremental angles are the angular rates from the IMU gyros integrated over the IMU sampling time interval. See ref. [9] for information on inertial sensors and IMU mechanizations. The inertial navigator 2 receives the inertial data from the IMU and computes the current IMU position (typically latitude, longitude, altitude), velocity (typically North, East and Down components) and orientation (roll, pitch and heading) at the IMU sampling rate.

The aiding sensors 5 are any sensors that provide navigation information that is statistically independent of the inertial navigation solution that the INS generates. A GNSS receiver is a widely used aiding sensor.

The error estimator 4 is one of several possible estimation algorithms that compute an estimate of a state vector based on constructed measurements. The error estimator is typically a Kalman filter (see ref. [10]), however it can be one of several other types of multivariable estimators that include an unscented Kalman filter (see refs. [13], [14]), a particle filter (see ref. [15]), or an M-estimator (of which a least-squares adjustment is a special case; see ref. [16] as an example). The measurements typically comprise computed differences between the inertial navigation solution elements and corresponding data elements from the aiding sensors. For example, an inertial-GNSS position measurement comprises the differences in the latitudes, longitudes and altitudes respectively computed by the inertial navigator and a GNSS receiver. The true positions cancel in the differences, so that the differences in the position errors remain. An error estimator designed for integration of an INS and aiding sensors typically estimates the errors in the INS and aiding sensors. The INS errors typically comprise the following:

- Inertial North, East and Down position errors
- Inertial North, East and Down velocity errors
- Inertial platform misalignment errors
- Accelerometer biases
- Gyro biases

GNSS errors may include the following:

- North, East and Down position errors
- Receiver clock offset and drift
- Carrier phase ambiguities
- Atmospheric range errors
- Multipath errors
- Antenna phase center (APC) errors

Ref. [10] provides a relatively comprehensive treatment of Kalman filtering. It also contains the aided INS as an example application. Ref. [11] provides a detailed analysis of different INS error models that may be used in an AINS Kalman filter.

The error controller 3 computes a vector of resets from the INS error estimates generated by the error estimator and applies these to the inertial navigator integration processes, thereby regulating the inertial navigator errors in a closed-loop error control loop. This causes the inertial navigator errors to be continuously regulated and hence maintained at significantly smaller magnitudes that an uncontrolled or free-inertial navigator would be capable of.

The technology of aided inertial navigation originated in the late 1960s and found application within military navigation systems. Since then, much research has been conducted and much literature has been generated on the subject. An example of a book on the subject is ref. [8]. The equivalent of Fig. 10 is shown in Figure 6-2 in ref. [8], p. 273. See also ref. [11] for a relatively comprehensive treatment of the mathematics of aided INS.

System

Fig. 11 schematically illustrates a system 100 in one embodiment of the invention. System 100 comprises an NSS receiver and/or a processing entity capable of receiving data from the NSS receiver. System 100 operates to estimate parameters derived from NSS signals useful to, i.e. suitable to, determine a position. The NSS receiver is configured for observing at least one NSS signal from each of a plurality of NSS satellites over multiple epochs. System 100 comprises an estimator-operating unit 110 and an updating unit 120.

Estimator-operating unit 110 is configured for operating an estimation process, hereinafter referred to as "NSS estimator" 10, wherein the NSS estimator 10 uses state variables and computes values of its state variables based on at least one of: NSS signals, here referred to as "first NSS signals", observed by the NSS receiver, and information derived from the first NSS signals, and wherein the NSS estimator 10 uses, among other state variables, a subset of state variables comprising six state variables representing an estimated position and estimated velocity of the NSS receiver reference point, as described above. Updating unit 120 is configured for recurrently updating the subset of state variables under a constant-velocity assumption and adding thereto an estimated velocity change and an estimated time-integrated velocity change of the NSS receiver reference point, the estimated velocity change and estimated time-integrated velocity change of the NSS receiver reference point being based on data from at least one sensor (also referred to as "sensor set A") suitable for determining a change in velocity of the NSS receiver reference point.

In one embodiment, a vehicle comprises a system 100 as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, and a grader. Exemplary applications may include machine guidance, construction work, operation of unmanned aerial vehicles (UAV), also known as drones, and operation of unmanned surface vehicles/vessels (USV).

Additional remarks

Any of the above-described methods and their embodiments may be implemented, at least partially, by means of a computer program or a set of computer programs. The computer program(s) may be loaded on an apparatus, such as for example an NSS receiver (running on a rover station, on a moving reference station, or within a vehicle) or a server (which may comprise one or a plurality of computers). Therefore, the invention also relates, in some embodiments, to a computer program or set of computer programs, which, when carried out on an apparatus as described above, such as for example an NSS receiver (running on a rover station, on a moving reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and apparatuses.

As mentioned above, a NSS receiver comprises one or more antennas configured to receive NSS signals at the frequencies broadcasted by the NSS satellites, and a NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "estimator-operating unit", "updating unit", and the like are used herein as units (or sub-units) of an apparatus (such as an NSS receiver), no restriction is made regarding how distributed the constituent parts of a unit (or sub-unit) may be. That is, the constituent parts of a unit (or sub-unit) may be distributed in different software or hardware components or devices for bringing about the intended function. Further, the units may be gathered together for performing their functions by means of a combined, single unit (or sub-unit).

The above-mentioned units and sub-units may be implemented using hardware, software, a combination of hardware and software, pre-programmed ASICs (application-specific integrated circuit), etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| AINS | aided inertial navigation system |
| APC | antenna phase center |
| BDS | BeiDou Navigation Satellite System |
| C/A | coarse/acquisition (code) |
| CAD | computer-aided design |
| CD | compact disc |
| CD-ROM | compact disk read-only memory |
| CPU | central processing unit |
| DCM | direction cosine matrix |
| DOF | degree of freedom |
| DVD | digital versatile disc |
| ECEF | Earth-centered, Earth-fixed coordinate system |
| GNSS | global navigation satellite system |
| GPS | Global Positioning System |
| I/O | input/output |
| IMU | inertial measurement unit |
| INS | inertial navigation system |
| IP | Internet Protocol |
| LEO-PNT | Low Earth Orbit-Positioning, Navigation and Timing |
| MBL | map-based localization |
| MEO-PNT | Medium Earth Orbit-Positioning, Navigation, and Timing |
| NAVIC | NAVigation with Indian Constellation |
| NED | north, east, down (frame) |
| NSS | navigation satellite system |
| PRN | pseudo-random noise |
| QZSS | Quasi-Zenith Satellite System |
| RAM | random-access memory |
| ref. | reference |
| refs. | references |
| RNSS | regional navigation satellite system |
| ROM | read-only memory |
| RTK | real-time kinematic |
| RTS | robotic total station |
| SSD | solid-state disk |
| UAV | unmanned aerial vehicle |
| UTS | universal total station |

References:

[1] Hofmann-Wellenhof, B., et al., "GNSS, Global Navigation Satellite Systems, GPS, GLONASS, Galileo, & more", Springer-Verlag Wien, 2008.

[2a] Groves, Paul D. (2008), "Principles of GNSS, Inertial, and Multisensor Integrated Navigation Systems", Artech House, ISBN 978-1-58053-255-6.

[2b] Groves, Paul D. (2013), "Principles of GNSS, Inertial, and Multisensor Integrated Navigation Systems", Second Edition, Artech House, ISBN 978-1-60807-005-3.

[3] Jan Van Sickle, "Two Types of Observables | GEOG 862: GPS and GNSS for Geospatial Professionals", John A. Dutton e-Education Institute, College of Earth and Mineral Sciences, The Pennsylvania State University, retrieved from https://www.e-education.psu.edu/geog862/node/1752 on November 8, 2021.

[4] EP 3 035 080 A1 titled "Navigation satellite system positioning involving the generation of correction information" (Trimble ref.: A4396).

[5] EP 3 130 943 A1 titled "Navigation satellite system positioning involving the generation of tropospheric correction information" (Trimble ref.: 15072-EPO).

[6] Anderson, B. D. O., and Moore, J. B., "Optimal Filtering", Prentice-Hall, Inc., Englewood Cliffs, New Jersey, 1979, ISBN 0-13-638122-7.

[7] EP 3 293 549 A1 titled "Advanced navigation satellite system positioning method and system using delayed precise information" (Trimble ref.: 16029-EPO).

[8] George Siouris, "Aerospace Avionics Systems, A Modern Synthesis", Academic Press 1993.

[9] A. Lawrence, "Modern Inertial Technology, Navigation Guidance and Control", Second Edition, Springer 1998.

[10] R.G. Brown and P.Y.C. Hwang, "Introduction to Random Signals and Applied Kalman Filtering", 3rd Edition, John Wiley & Sons 1997.

[11] R.M. Rogers, "Applied Mathematics in Integrated Navigation Systems", AIAA Education Series 2000.

[12] P.G. Savage, "Strapdown Analytics, Parts 1 and 2", Strapdown Associates, 2000

[13] S. J. Julier and J. K. Uhlmann, "A New Extension of the Kalman Filter to Nonlinear Systems". Proceedings of AeroSense: The 11th Int. Symp. On Aerospace/Defence Sensing, Simulation and Controls, 1997.

[14] Wan, E.A.; Van Der Merwe, R., "The unscented Kalman filter for nonlinear estimation", Proceedings of the IEEE 2000 Adaptive Systems for Signal Processing, Communications, and Control Symposium.

[15] Arulampalam, M.S., Maskell, S., Gordon, N. & Clapp, T. (2002), "A tutorial on particle filters for online nonlinear/non-gaussian Bayesian tracking". IEEE Transactions on Signal Processing. 50(2):174-188.

[16] Huber, Peter J. (2009). "Robust Statistics (2nd ed.)". Hoboken, NJ: John Wiley & Sons Inc.

[17] Scherzinger, Bruno M., "Inertial navigator error models for large heading uncertainty." Proceedings of Position, Location and Navigation Symposium-PLANS'96. IEEE, 1996, pp. 477-484.

## Claims

1. Method, carried out by at least one of a navigation satellite system receiver, hereinafter abbreviated as "NSS receiver", and a processing entity capable of receiving data from the NSS receiver, for estimating parameters useful to determine a position, the NSS receiver observing NSS signals from NSS satellites, the method comprising:

   operating (s10) an estimation process, hereinafter referred to as "NSS estimator" (10), wherein the NSS estimator (10) uses state variables and computes values of its state variables based on at least one of: NSS signals, hereinafter referred to as "first NSS signals", observed by the NSS receiver, and information derived from the first NSS signals, and wherein the NSS estimator (10) uses, among other state variables, a subset of state variables comprising six state variables representing an estimated position and estimated velocity of a point associated with the NSS receiver, the point being hereinafter referred to as "NSS receiver reference point"; and
   recurrently updating (s20) the subset of state variables under a constant-velocity assumption and adding thereto an estimated velocity change and an estimated time-integrated velocity change of the NSS receiver reference point, the estimated velocity change and estimated time-integrated velocity change of the NSS receiver reference point being based on data from at least one sensor suitable for determining a change in velocity of the NSS receiver reference point.

2. Method of claim 1, wherein the estimated velocity change and estimated time-integrated velocity change of the NSS receiver reference point are further based on at least one of:

   NSS signals, hereinafter referred to as "second NSS signals", observed by the NSS receiver, and information derived from the second NSS signals,

wherein the second NSS signals are different from, partially different from, or the same as the first NSS signals.

3. Method of claim 1 or 2, wherein the estimated velocity change and estimated time-integrated velocity change of the NSS receiver reference point are further based on at least one of the following processes:

   a process using

   the at least one sensor, the at least one sensor comprising a lidar sensor rigidly attached, directly or indirectly, to an antenna or antennas of the NSS receiver,
   a map-based localization algorithm, and
   a predetermined map,

   the map-based localization algorithm being used for estimating a position and orientation of the lidar sensor and the process being for estimating the velocity change of the NSS receiver reference point;
   a process using a robotic total station for estimating a position of the at least one sensor;
   a process using a camera localization system for estimating a position of the at least one sensor;
   a process using an additional sensor for computing a coordinate transformation for transforming the change in velocity of the NSS receiver reference point determined by the at least one sensor to coordinates matching a definition of a state parameter subset of the NSS estimator (10);
   a process using a model for computing a coordinate transformation for transforming the change in velocity of the NSS receiver reference point determined by the at least one sensor to coordinates matching a definition of a state parameter subset of the NSS estimator (10); and
   a process using knowledge of a motion constraint for computing a coordinate transformation for transforming the change in velocity of the NSS receiver reference point determined by the at least one sensor to coordinates matching a definition of a state parameter subset of the NSS estimator (10).

4. Method according to any one of the preceding claims, wherein one of the following applies:

   the NSS receiver comprises a single antenna and has a single antenna phase center, and the NSS receiver reference point is the antenna phase center;
   the NSS receiver comprises a single antenna and has a plurality of antenna phase centers, and the NSS receiver reference point is one of the antenna phase centers or is a point being at a position derived from the relative positions of the antenna phase centers; and
   the NSS receiver comprises a plurality of antennas and has a plurality of antenna phase centers, and the NSS receiver reference point is one of the antenna phase centers or is a point being at a position derived from the relative positions of the antenna phase centers.

5. Method according to any one of the preceding claims, further comprising:
   outputting, by the NSS estimator (10), an estimated position of the NSS receiver reference point as represented by, or derived from, at least part of the subset of state variables.

6. Method according to any one of the preceding claims, wherein the estimated velocity change and estimated time-integrated velocity change of the NSS receiver reference point are provided to the NSS estimator (10) at a higher rate than the NSS estimator's (10) update rate, the method further comprising:
   accumulating the estimated velocity change and estimated time-integrated velocity change of the NSS receiver reference point prior to updating the subset of state variables using the estimated velocity change and estimated time-integrated velocity change of the NSS receiver reference point.

7. Method according to any one of the preceding claims, wherein

   the at least one sensor suitable for determining a change in velocity of the NSS receiver reference point is or comprises an inertial measurement unit (20) suitable for determining a change in velocity of the NSS receiver reference point; and
   the inertial measurement unit (20) is rigidly attached, directly or indirectly, to an antenna or antennas of the NSS receiver.

8. Method according to any one of the preceding claims, further comprising:

operating a second estimation process, hereinafter referred to as "delta-velocity estimator" (30), wherein the delta-velocity estimator (30) uses state variables and computes values of its state variables based on the data from the at least one sensor suitable for determining a change in velocity of the NSS receiver reference point; and wherein the estimated velocity change and estimated time-integrated velocity change of the NSS receiver reference point are outputted by the delta-velocity estimator (30).

9. Method according to both claims 2 and 8, wherein the delta-velocity estimator (30) computes values of its state variables further based on the at least one of:

   second NSS signals, and
   information derived from the second NSS signals.

10. Method of claim 8 or 9, further comprising:
    providing, from the delta-velocity estimator (30) to the NSS estimator (10), information obtained based on at least one of:

    at least one sensor suitable for determining at least one of a velocity, a velocity component, and a velocity magnitude of the NSS receiver reference point; and
    knowledge of at least one motion constraint suitable for providing information on an estimated velocity of the NSS receiver reference point.

11. Method of claim 10, wherein the at least one sensor suitable for determining at least one of a velocity, a velocity component, and a velocity magnitude of the NSS receiver reference point comprises at least one of: an odometer, a radar sensor, a camera, and a lidar.

12. Method according to any one of the preceding claims, wherein the NSS estimator (10) comprises at least one of a Kalman filter, and a robust estimator.

13. System (100) comprising at least one of a navigation satellite system receiver, hereinafter abbreviated as "NSS receiver", and a processing entity capable of receiving data from the NSS receiver, the system (100) being for estimating parameters useful to determine a position, the NSS receiver observing NSS signals from NSS satellites, and the system (100) being configured for:

    operating an estimation process, hereinafter referred to as "NSS estimator" (10), wherein the NSS estimator (10) uses state variables and computes values of its state variables based on at least one of: NSS signals, hereinafter referred to as "first NSS signals", observed by the NSS receiver, and information derived from the first NSS signals, and wherein the NSS estimator (10) uses, among other state variables, a subset of state variables comprising six state variables representing an estimated position and estimated velocity of a point associated with the NSS receiver, the point being hereinafter referred to as "NSS receiver reference point"; and
    recurrently updating the subset of state variables under a constant-velocity assumption and adding thereto an estimated velocity change and an estimated time-integrated velocity change of the NSS receiver reference point, the estimated velocity change and estimated time-integrated velocity change of the NSS receiver reference point being based on data from at least one sensor suitable for determining a change in velocity of the NSS receiver reference point.

14. Vehicle comprising a system (100) according to claim 13, the vehicle preferably being at least one of: a motor vehicle, an agricultural equipment, an agricultural tractor, a combine harvester, a crop sprayer, a forestry equipment, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

15. Computer program or set of computer programs comprising computer-readable instructions configured, when executed on a computer or set of computers, to cause the computer or set of computers to carry out the method according to any one of claims 1 to 12.

16. Computer program product or storage mediums comprising a computer program or set of computer programs according to claim 15.

first NSS signals (i.e., NSS
signals observed by the
NSS receiver) and/or
information derived
from the first NSS signals

10

NSS estimator

it uses, among other state
variables, a subset of state
variables comprising six state
variables representing an
estimated position and
estimated velocity of a NSS
receiver reference point

recurrently updating the subset of
state variables and adding thereto
an estimated velocity change and
an estimated time-integrated
velocity change of the NSS receiver
reference point

data from sensor(s)
suitable for determining
a change in velocity of
the NSS receiver
reference point (i.e.,
data from sensor set A)

estimated velocity change and an
estimated time-integrated
velocity change of the NSS
receiver reference point

second NSS signals (i.e.,
NSS signals observed by
the NSS receiver) and/or
information derived from
the second NSS signals

Fig. 1a

s10 — operating NSS estimator

s20 — updating subset of state
variables

Fig. 1b

first NSS signals (i.e., NSS signals observed by the NSS receiver) and/or information derived from the first NSS signals

10

NSS estimator

it uses, among other state variables, a subset of state variables comprising six state variables representing an estimated position and estimated velocity of a NSS receiver reference point

data from sensor(s) suitable for determining a change in velocity of the NSS receiver reference point (i.e., data from sensor set A)

recurrently updating the subset of state variables and adding thereto an estimated velocity change and an estimated time-integrated velocity change of the NSS receiver reference point

estimated velocity change and an estimated time-integrated velocity change of the NSS receiver reference point

Fig. 1c

first NSS signals (i.e., NSS signals observed by the NSS receiver) and/or information derived from the first NSS signals

10

estimated position of the NSS receiver reference point (as represented by, or derived from, at least part of the subset of state variables)

**NSS estimator**

it uses, among other state variables, a subset of state variables comprising six state variables representing an estimated position and estimated velocity of a NSS receiver reference point

data from sensor(s) suitable for determining a change in velocity of the NSS receiver reference point (i.e., data from sensor set A)

recurrently updating the subset of state variables and adding thereto an estimated velocity change and an estimated time-integrated velocity change of the NSS receiver reference point

estimated velocity change and an estimated time-integrated velocity change of the NSS receiver reference point

Fig. 2

first NSS signals (i.e.,
NSS signals observed
by the NSS receiver)
and/or information
derived from the first
NSS signals

10

**NSS estimator**

it uses, among other state
variables, a subset of state
variables comprising six state
variables representing an
estimated position and
estimated velocity of a NSS
receiver reference point

recurrently updating the subset of
state variables and adding thereto
an estimated velocity change and an
estimated time-integrated velocity
change of the NSS receiver
reference point

accumulating the estimated
velocity change and estimated
time-integrated velocity
change

data from sensor(s)
suitable for determining
a change in velocity of
the NSS receiver
reference point (i.e.,
data from sensor set A)

provided at a higher rate than the NSS
estimator's update rate

estimated velocity change and an
estimated time-integrated
velocity change of the NSS
receiver reference point

## Fig. 3

first NSS signals (i.e., NSS signals observed by the NSS receiver) and/or information derived from the first NSS signals

**10**

**NSS estimator**

it uses, among other state variables, a subset of state variables comprising six state variables representing an estimated position and estimated velocity of a NSS receiver reference point

recurrently updating the subset of state variables and adding thereto an estimated velocity change and an estimated time-integrated velocity change of the NSS receiver reference point

data from sensor(s) suitable for determining a change in velocity of the NSS receiver (i.e., data from sensor set A)

**20**

**IMU**

estimated velocity change and an estimated time-integrated velocity change of the NSS receiver reference point

Fig. 4

10

first NSS signals (i.e., NSS
signals observed by the
NSS receiver) and/or
information derived
from the first NSS signals

NSS estimator

it uses, among other state
variables, a subset of state
variables comprising six state
variables representing an
estimated position and
estimated velocity of a NSS
receiver reference point

recurrently updating the subset of
state variables and adding thereto
an estimated velocity change and
an estimated time-integrated
velocity change of the NSS
receiver reference point

estimated velocity change and an
estimated time-integrated velocity
change of the NSS receiver
reference point

data from sensor(s)
suitable for determining
a change in velocity of
the NSS receiver
reference point (i.e.,
data from sensor set A)

30

delta-velocity estimator

second NSS signals (i.e.,
NSS signals observed by
the NSS receiver) and/or
information derived from
the second NSS signals

Fig. 5

first NSS signals (i.e., NSS signals observed by the NSS receiver) and/or information derived from the first NSS signals

10

NSS estimator

it uses, among other state variables, a subset of state variables comprising six state variables representing an estimated position and estimated velocity of a NSS receiver reference point

measurement information obtained based on sensor suitable for determining a velocity, velocity component and/or velocity magnitude of the NSS receiver reference point, and/or motion constraint knowledge

recurrently updating the subset of state variables and adding thereto an estimated velocity change and an estimated time-integrated velocity change of the NSS receiver reference point

estimated velocity change and an estimated time-integrated velocity change of the NSS receiver reference point

data from sensor(s) suitable for determining a change in velocity of the NSS receiver reference point (i.e., data from sensor set A)

second NSS signals (i.e., NSS signals observed by the NSS receiver) and/or information derived from the second NSS signals

delta-velocity estimator

30

data from sensor(s) suitable for determining a velocity, velocity component and/or velocity magnitude of the NSS receiver reference point (i.e., data from sensor set B)

Fig. 6

first NSS signals (i.e., NSS signals observed by the NSS receiver) and/or information derived from the first NSS signals

10

**NSS estimator**

it uses, among other state variables, a subset of state variables comprising six state variables representing an estimated position and estimated velocity of a NSS receiver reference point

recurrently updating the subset of state variables and adding thereto an estimated velocity change and an estimated time-integrated velocity change of the NSS receiver reference point

accumulating the estimated velocity change and estimated time-integrated velocity change

provided at a higher rate than the NSS estimator's update rate

estimated velocity change and an estimated time-integrated velocity change of the NSS receiver reference point

data from sensor(s) suitable for determining a change in velocity of the NSS receiver reference point (i.e., data from sensor set A)

30

**delta-velocity estimator**

second NSS signals (i.e., NSS signals observed by the NSS receiver) and/or information derived from the second NSS signals

## Fig. 7

EP 4 571 364 A1

Fig. 8

Fig. 9

EP 4 571 364 A1

Fig. 10

Fig. 11

Europäisches
Patentamt

European
Patent Office

Office européen
des brevets

# EUROPEAN SEARCH REPORT

**Application Number**

EP 23 21 5755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAPIER M: "INTEGRATION OF SATELLITE AND INERTIAL POSITIONING SYSTEMS", JOURNAL OF NAVIGATION, ROYAL INSTITUTE OF NAVIGATION, LONDON, GB, vol. 43, no. 1, 1 January 1990 (1990-01-01), pages 48-57, XP000618793, ISSN: 0373-4633 * figures 2, 4 * * sections: 4.2 Kalman filter for GPS receiver; 5.1 Cascaded Kalman filters. * | 1-16 | INV. G01S19/49 G01S19/52 G01S19/39 |
| A | WEIHUA MA ET AL: "SINS/GPS/SS reduced-order kalman filter design based state decoupling for space application", INDUSTRIAL ELECTRONICS AND APPLICATIONS, 2009. ICIEA 2009. 4TH IEEE CONFERENCE ON, IEEE, PISCATAWAY, NJ, USA, 25 May 2009 (2009-05-25), pages 2596-2600, XP031482505, ISBN: 978-1-4244-2799-4 * abstract; figure 1 * * sections: I. Introduction; Iv. Reduced Filter. * | 1-16 | |

TECHNICAL FIELDS
SEARCHED (IPC)

G01S

-/--

The present search report has been drawn up for all claims

| Place of search | Date of completion of the search | Examiner |
|---|---|---|
| Munich | 29 May 2024 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt
European
Patent Office
Office européen
des brevets

# EUROPEAN SEARCH REPORT

**Application Number**

EP 23 21 5755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG J-H ET AL: "An Intelligent Real-Time MEMS IMU/HSGPS Integrated Vehicular Navigation System and Road Test Results", GNSS 2006 - PROCEEDINGS OF THE 19TH INTERNATIONAL TECHNICAL MEETING OF THE SATELLITE DIVISION OF THE INSTITUTE OF NAVIGATION (ION GNSS 2006), THE INSTITUTE OF NAVIGATION, 8551 RIXLEW LANE SUITE 360 MANASSAS, VA 20109, USA, 29 September 2006 (2006-09-29), pages 2165-2173, XP056009834, * abstract; figure 3 * * sections: Introduction; Real-time intelligent integration methodology. * ----- | 1-16 | |
| A | ZHOU SU ET AL: "Cascaded GPS/IMU Integrated Positioning System Based on Vehicle Kinematics Model", 2020 CHINESE CONTROL AND DECISION CONFERENCE (CCDC), IEEE, 22 August 2020 (2020-08-22), pages 1134-1139, XP033809385, DOI: 10.1109/CCDC49329.2020.9164392 [retrieved on 2020-08-10] * abstract; figure 2 * * sections: 1 Introduction; 3.1 Architecture of Cascaded GPS/IMU Integrated Positioning System. * ----- -/-- | 1-16 | TECHNICAL FIELDS SEARCHED (IPC) |

The present search report has been drawn up for all claims

| Place of search | Date of completion of the search | Examiner |
|---|---|---|
| Munich | 29 May 2024 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 23 21 5755

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CROCOLL PHILIPP ET AL: "Unified Model Technique for Inertial Navigation Aided by Vehicle Dynamics Model", 20130901, vol. 60, no. 3, 1 September 2013 (2013-09-01), pages 179-193, XP056007266, DOI: 10.1002/NAVI.39 * figures 1-3 * * sections: Related work; Overview of the Unified Model Method. * ----- | 1-16 | |
| | | | **TECHNICAL FIELDS SEARCHED (IPC)** |

The present search report has been drawn up for all claims

| Place of search | Date of completion of the search | Examiner |
|---|---|---|
| Munich | 29 May 2024 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1
- EP 3130943 A1
- EP 3293549 A1

**Non-patent literature cited in the description**

- GNSS, Global Navigation Satellite Systems. **HOFMANN-WELLENHOF, B. et al.** GPS, GLONASS, Galileo, & more. Springer-Verlag Wien, 2008
- **GROVES, PAUL D.** Principles of GNSS, Inertial, and Multisensor Integrated Navigation Systems. Artech House, 2008
- Principles of GNSS, Inertial, and Multisensor Integrated Navigation Systems. **GROVES, PAUL D.** Principles of GNSS, Inertial, and Multisensor Integrated Navigation Systems. Artech House, 2013
- Two Types of Observables | GEOG 862: GPS and GNSS for Geospatial Professionals. **JAN VAN SICKLE** ; **JOHN A. DUTTON**. Two Types of Observables | GEOG 862: GPS and GNSS for Geospatial Professionals. e-Education Institute, College of Earth and Mineral Sciences, The Pennsylvania State University, 08 November 2021
- Optimal Filtering. **ANDERSON, B. D. O.** ; **MOORE, J. B.** Englewood Cliffs. Prentice-Hall, Inc., 1979
- Aerospace Avionics Systems. **GEORGE SIOURIS**. A Modern Synthesis. Academic Press, 1993
- Modern Inertial Technology. **A. LAWRENCE**. Navigation Guidance and Control. Second Edition, Springer, 1998
- **R.G. BROWN** ; **P.Y.C. HWANG**. Introduction to Random Signals and Applied Kalman Filtering. John Wiley & Sons, 1997

- **R.M. ROGERS**. Applied Mathematics in Integrated Navigation Systems. *AIAA Education Series*, 2000
- **P.G. SAVAGE**. Strapdown Analytics, Parts 1 and 2. *Strapdown Associates*, 2000
- **S. J. JULIER** ; **J. K. UHLMANN**. A New Extension of the Kalman Filter to Nonlinear Systems. *Proceedings of AeroSense: The 11th Int. Symp. On Aerospace/- Defence Sensing, Simulation and Controls*, 1997
- **WAN, E.A** ; **VAN DER MERWE, R.** The unscented Kalman filter for nonlinear estimation. *Proceedings of the IEEE 2000 Adaptive Systems for Signal Processing, Communications, and Control Symposium*
- **ARULAMPALAM, M.S.** ; **MASKELL, S.** ; **GORDON, N.** ; **CLAPP, T.** A tutorial on particle filters for online nonlinear/non-gaussian Bayesian tracking. *IEEE Transactions on Signal Processing.*, 2002, vol. 50 (2), 174-188
- **HUBER, PETER J.** Robust Statistics. John Wiley & Sons Inc., 2009
- **SCHERZINGER, BRUNO M.** Inertial navigator error models for large heading uncertainty.. *Proceedings of Position, Location and Navigation Symposium-PLANS'96. IEEE*, 1996, 477-484